# EUROPÄISCHE PATENTSCHRIFT

(11) **EP 0 393 443 B1**
(45) Veröffentlichungstag und Bekanntmachung des Hinweises auf die Patenterteilung: **15.12.1999**
(21) Anmeldenummer: 90106668.8
(22) Anmeldetag: 06.04.1990
(51) Int. Cl.: C09K 19/42, C09K 19/30, G02F 1/137

(54) **Supertwist-Flüssigkristallanzeige**
Supertwist liquid crystal display
Affichage à cristal liquide supertorsadé

(30) Priorität: 19.04.1989 DE 3912764
(43) Veröffentlichungstag der Anmeldung: 24.10.1990
(73) Patentinhaber: MERCK PATENT GmbH, 64271 Darmstadt (DE)
(72) Erfinder: Plach, Herbert, Dr., D-6100 Darmstadt (DE); Weber, Georg, D-6106 Erzhausen (DE); Hittich, Reinhard, Dr., D-6101 Modautal 1 (DE); Reiffenrath, Volker, D-6101 Rossdorf (DE); Klug, Rudolf, Dr., D-8750 Aschaffenburg (DE)

(56) Entgegenhaltungen:
- EP-A- 0 316 186
- EP-A- 0 332 005
- EP-A- 0 366 985
- WO-A-88/07514
- GB-A- 2 189 785

## Beschreibung

Die Erfindung betrifft Supertwist-Flüssigkristallanzeigen (SFA) mit sehr kurzen Schaltzeiten und guten Steilheiten und Winkelabhängigkeiten sowie die darin verwendeten neuen nematischen Flüssigkristallmischungen.

SFA gemäß des Oberbegriffs sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff SFA umfaßt hier jedes höher verdrillte Anzeigeelement mit einem Verdrillungswinkel dem Betrage nach zwischen 160° und 360°, wie beispielsweise die Anzeigeelemente nach Waters et al. (C.M. Waters et al., Proc. Soc. Inf. Disp. (New York) (1985) (3rd Intern. Display Conference, Kobe, Japan), die STN-LCD's (DE OS 35 03 259), SBE-LCD's (T.J. Scheffer und J. Nehring, Appl. Phys. Lett. 45 (1984) 1021), OMI-LCD's (M. Schadt und F. Leenhouts, Appl. Phys. Lett. 50 (1987), 236, DST-LCD's (EP OS 0 246 842) oder BW-STN-LCD's (K. Kawasaki et al., SID 87 Digest 391 (20.6)).

Derartige SFA zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Von besonderem Interesse sind SFA mit sehr kurzen Schaltzeiten insbesondere auch bei tieferen Temperaturen. Zur Erzielung von kurzen Schaltzeiten wurden bisher insbesondere die Viskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Es besteht somit immer noch ein großer Bedarf nach SFA mit sehr kurzen Schaltzeiten bei gleichzeitig großem Arbeitstemperaturbereich, hoher Kennliniensteilheit, guter Winkel abhängigkeit des Kontrastes und niedriger Schwellenspannung.

Der Erfindung liegt die Aufgabe zugrunde, SFA bereitzustellen, die die oben angegebenen Nachteile nicht oder nur in geringerem Maße und gleichzeitig sehr kurze Schaltzeiten aufweisen.

Es wurde nun gefunden, daß diese Aufgabe gelöst werden kann, wenn man nematische Flüssigkristallmischungen verwendet, die folgende Komponenten enthalten:
a) mindestens eine Komponente, ausgewählt aus der Gruppe T, bestehend aus Verbindungen der Formeln T1 und T2: 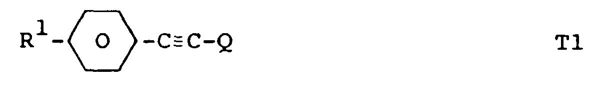 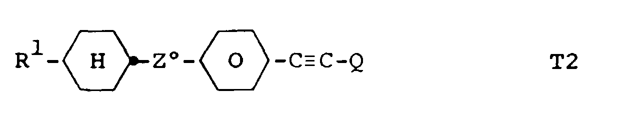 worin 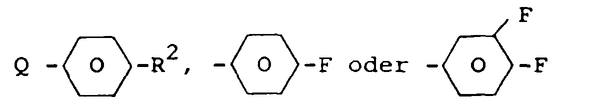 bedeutet,
   R¹ und R² jeweils unabhängig voneinander R bedeuten, wobei R Alkyl mit 1-12 C-Atomen ist, worin auch eine oder zwei nicht benachbarte CH₂ Gruppen durch -O-, -CH=CH-, -CO-, -O-CO- oder -CO-O- ersetzt sein können, und Z° -CH₂CH₂- oder eine Einfachbindung bedeutet, und die 1,4-Phenylenringe auch lateral durch Fluor substituiert sein können,
b) 10-80 Gew.% einer flüssigkristallinen Komponente C, bestehend aus einer oder mehreren Verbindungen mit einer dielektrischen Anisotropie von über +1,5, wobei Komponente C mindestens eine Verbindung, ausgewählt aus der Gruppe bestehend aus den Verbindungen Ca bis Cd enthält: 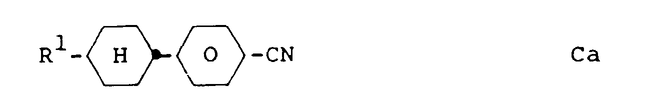 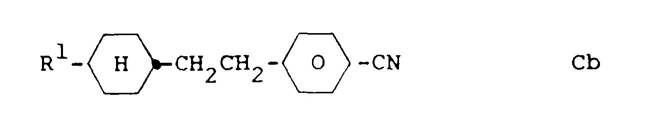 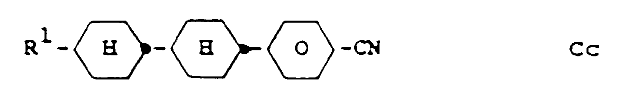 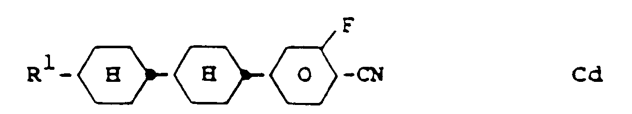 wobei R¹ die oben angegebene Bedeutung hat,
c) 0-20 Gew.% einer flüssigkristallinen Komponente D, bestehend aus einer oder mehreren Verbindungen mit einer dielektrischen Anisotropie von unter -1,5 und
d) eine optisch aktive Komponente E in einer Menge, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt,
   zusätzlich mindestens eine Komponente enthält, ausgewählt aus der Gruppe A, bestehend aus Verbindungen der Formeln All und AIV bis AVI: 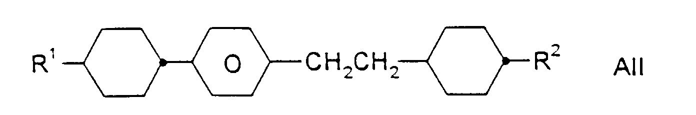 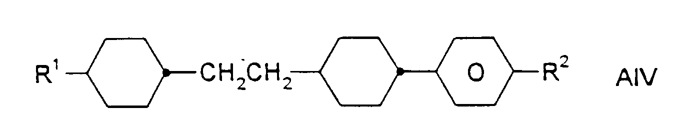 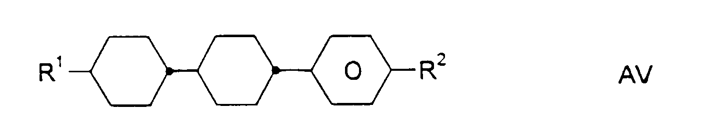 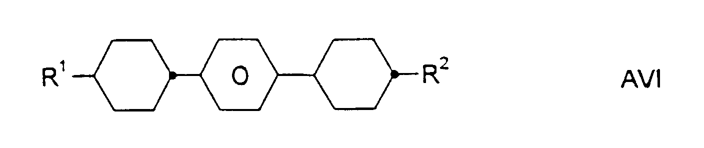 worin R¹ und R² jeweils unabhängig voneinander jeweils R bedeuten und
   - R: Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können,
   und/oder ausgewählt aus der Gruppe B1, bestehend aus den Verbindungen der Formeln Bl bis BIV: 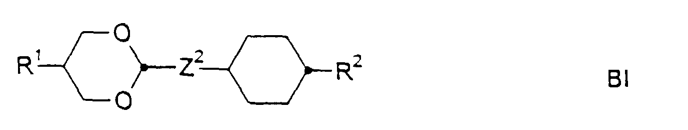 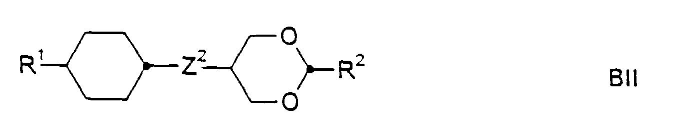 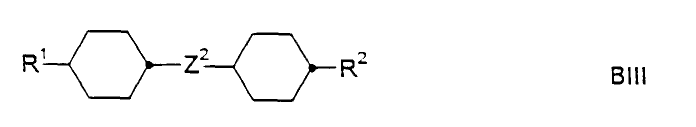 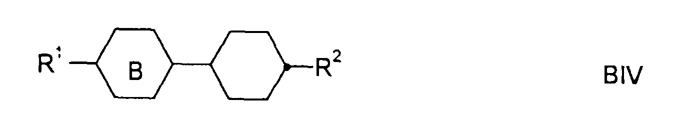 worin R¹ und R² jeweils unabhängig voneinander die für R angegebene Bedeutung haben, Z² -CH₂CH₂-, -CO-O-, -O-CO- oder eine Einfachbindung, und 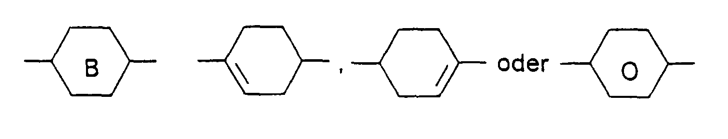 bedeutet,
   und/oder mindestens eine Komponente enthält, ausgewählt aus der Gruppe B2, bestehend aus den Verbindungen der Formeln BV bis BVII: 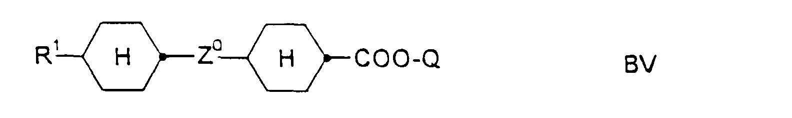 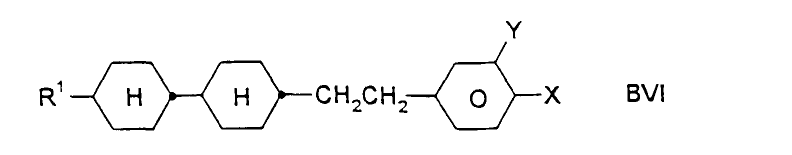 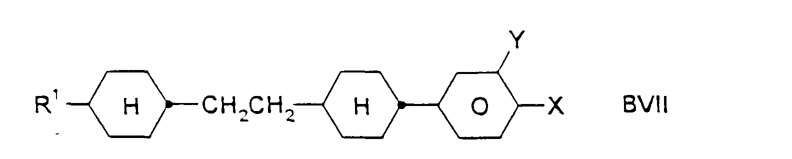 worin R¹ die für R angegebene Bedeutung hat,
   Z⁰ -CH₂CH₂- oder eine Einfachbindung ist und 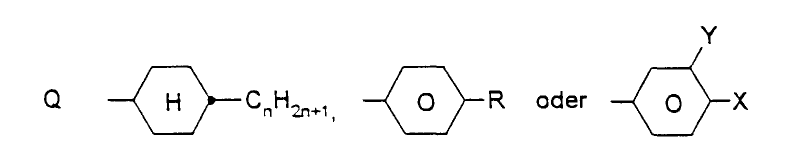 bedeutet,
   wobei n 1 bis 9 ist, X CN oder F und Y H oder F bedeuten,
   und/oder mindestens eine Komponente enthält, ausgewählt aus der Gruppe B3, bestehend aus den Verbindungen der Formeln BVIII und BIX: 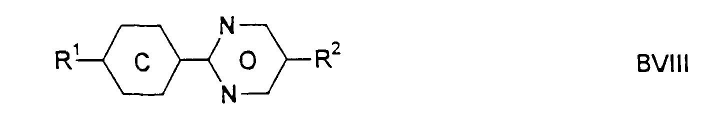 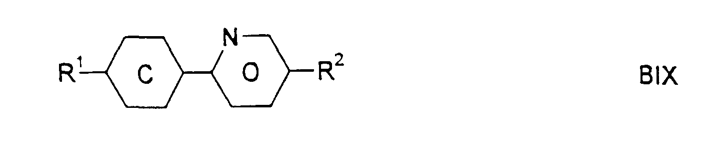 wobei R¹ und R² jeweils unabhängig voneinander die für R angegebene Bedeutung haben, und 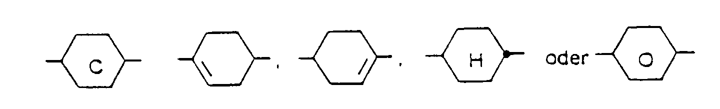 bedeutet,
   und/oder eine oder mehrere Verbindungen ausgewählt aus der folgenden Gruppe enthält: 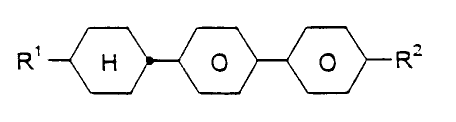 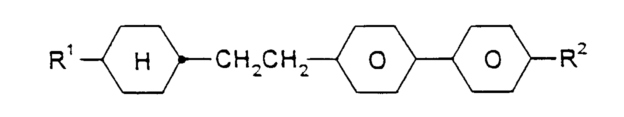 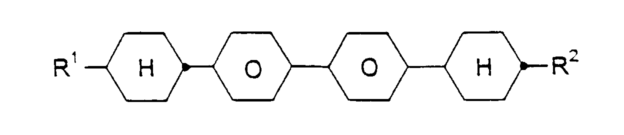 worin R¹ und R² die bei Komponente A angegebenen bevorzugten Bedeutungen haben und eine der beiden 1,4-Phenylengruppen auch durch Fluor substituiert sein kann, und
   einen nematischen Phasenbereich von mindestens 60 °C, eine Viskosität von nicht mehr als 30 mPa.s und eine dielektrische Anisotropie von mindestens +5 aufweist, wobei die dielektrischen Anisotropien der Verbindungen und die auf die nematische Flüssigkristallmischung bezogenen Parameter auf eine Temperatur von 20 °C bezogen sind,
   mit den Maßgaben, daß
   (a) nematische Flüssigkristallmischungen mit eine dielektrischen Verhältnis Δε / ε_{┴} < 2.0 ausgeschlossen sind, wobei Δε die dielektrische Anisotropie und ε_{┴} die Dielektrizitätskonstante in Richtung der kurzen Achse der Flüssigkristallmoleküle bedeutet, und
   (b) nematische Flüssigkristallmischungen enthaltend Verbindungen der Formeln 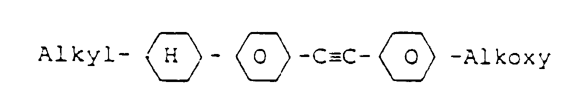 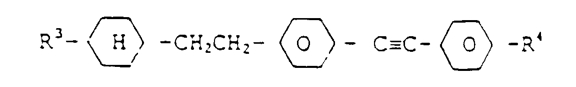 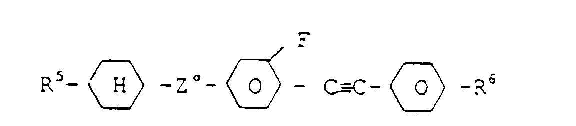 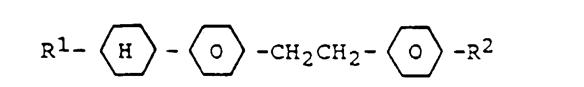 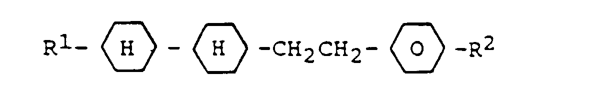 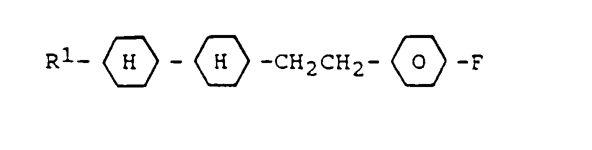 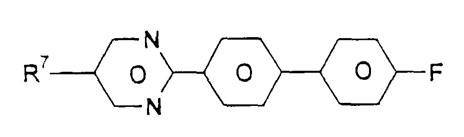 ausgeschlossen sind, worin Alkyl und Alkoxy jeweils geradkettig sind und bis zu 7 C-Atome aufweisen, R³ und R⁴ jeweils eine Alkylgruppe mit 1-8 C-Atomen bedeuten, R⁵ und R⁶ jeweils eine Alkylgruppe mit 1-10 C-Atomen bedeuten, Z° -CH₂CH₂- oder eine Einfachbindung bedeutet, R¹ und R² jeweils unabhängig voneinander jeweils R bedeuten und R Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können und R⁷ Alkyl mit 1 bis 12 C-Atomen bedeutet.

Gegenstand der Erfindung ist somit ein SFA mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 160 und 360°, dadurch gekennzeichnet, daß die nematische Flüssigkristallmischung

a) mindestens eine Komponente enthält, ausgewählt aus der Gruppe T, bestehend aus Verbindungen der Formeln T1 und T2: 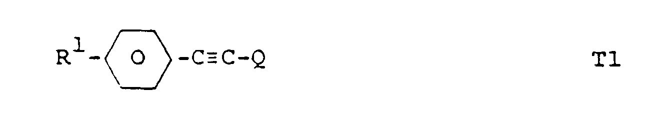 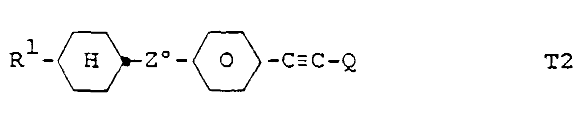 worin 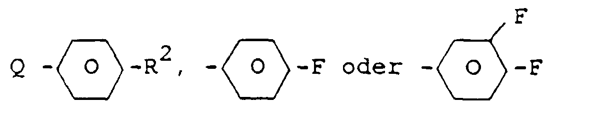 bedeutet,
   R¹ und R² jeweils unabhängig voneinander R bedeuten, wobei R Alkyl mit 1-12 C-Atomen ist, worin auch eine oder zwei nicht benachbarte CH₂Gruppen durch -O-,-CH=CH-, -CO-, -O-CO- oder -CO-O- ersetzt sein können, und Z° -CH₂CH₂- oder eine Einfachbindung bedeutet, und die 1,4-Phenylenringe auch lateral durch Fluor substituiert sein können,
b) 10-80 Gew.% einer flüssigkristallinen Komponente C, bestehend aus einer oder mehreren Verbindungen mit einer dielektrischen Anisotropie von über +1,5, wobei Komponente C mindestens eine Verbindung, ausgewählt aus der Gruppe bestehend aus den Verbindungen Ca bis Cd enthält: 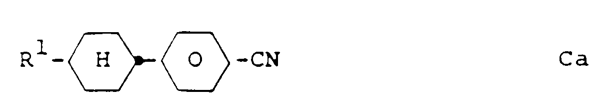 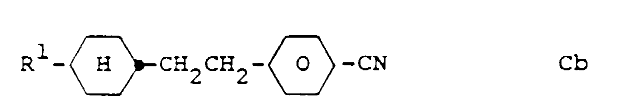 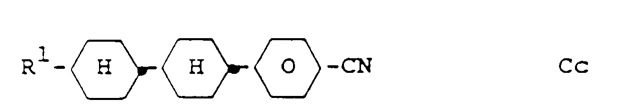 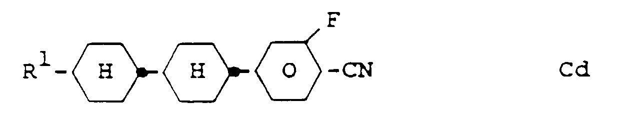 wobei R¹ die oben angegebene Bedeutung hat,
c) 0-20 Gew.-% einer flüssigkristallinen Komponente D enthält, bestehend aus einer oder mehreren Verbindungen mit einer dielektrischen Anisotropie von unter -1,5, und
d) eine optisch aktive Komponente E in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt,
zusätzlich mindestens eine Komponente enthält, ausgewählt aus der Gruppe A, bestehend aus Verbindungen der Formeln All und AIV bis AVI: 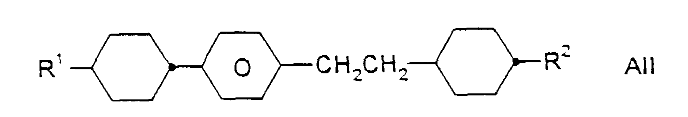 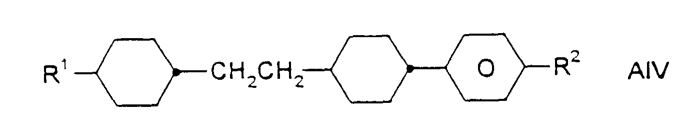 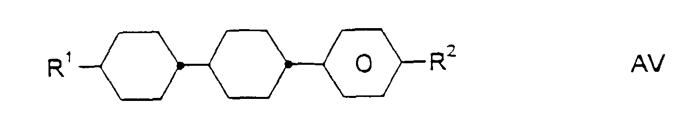 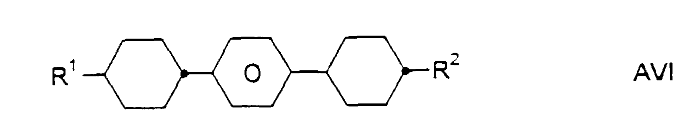 worin R¹ und R² jeweils unabhängig voneinander jeweils R bedeuten und
- R: Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können,
und/oder ausgewählt aus der Gruppe B1, bestehend aus den Verbindungen der Formeln B1 bis B1V: 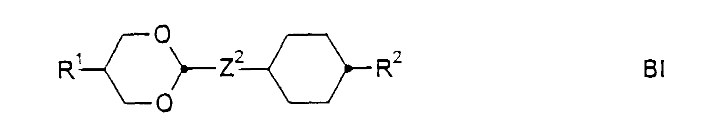 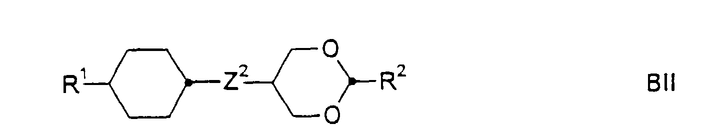 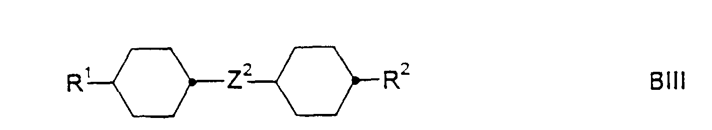 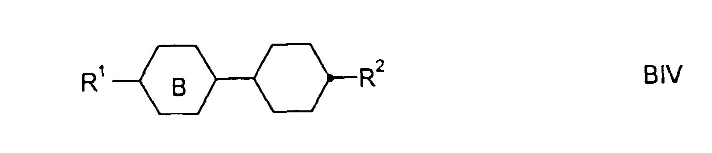 worin R¹ und R² jeweils unabhängig voneinander die für R angegebene Bedeutung haben, Z² -CH₂CH₂-, -CO-O-, -O-CO- oder eine Einfachbindung, und 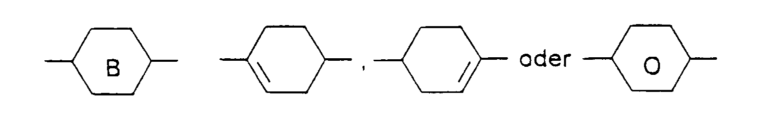 bedeutet,
und/oder mindestens eine Komponente enthält, ausgewählt aus der Gruppe B2, bestehend aus den Verbindungen der Formeln BV bis BVII: 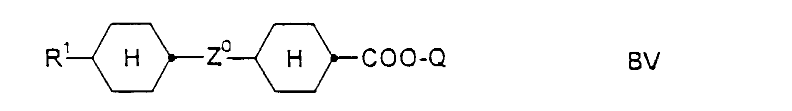 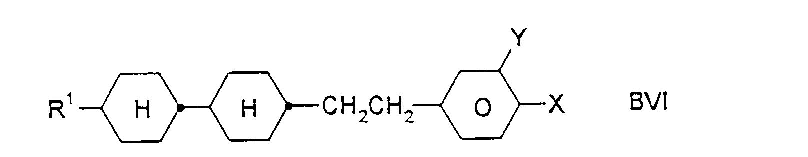 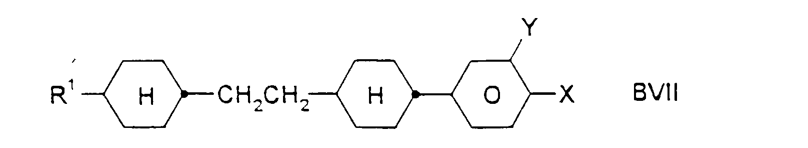 worin R¹ die für R angegebene Bedeutung hat,
- Z⁰: -CH₂CH₂- oder eine Einfachbindung ist und 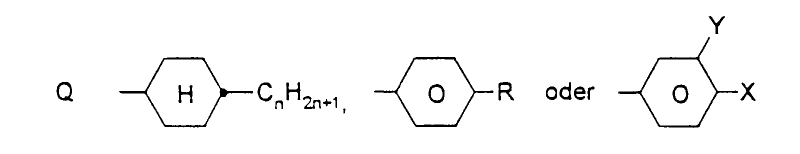
bedeutet,
wobei n 1 bis 9 ist, X CN oder F und Y H oder F bedeuten,
und/oder mindestens eine Komponente enthält, ausgewählt aus der Gruppe B3, bestehend aus den Verbindungen der Formeln BVIII und BIX: 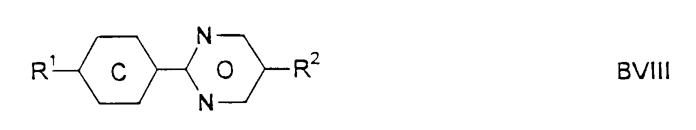 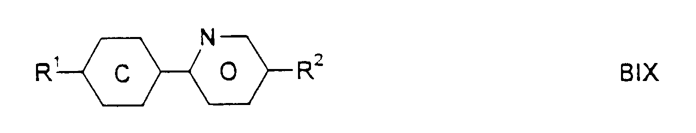 wobei R¹ und R² jeweils unabhängig voneinander die für R angegebene Bedeutung haben, und 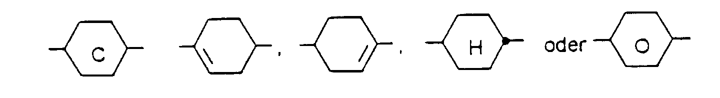 bedeutet,
und/oder eine oder mehrere Verbindungen ausgewählt aus der folgenden Gruppe enthält: 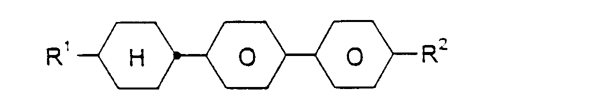 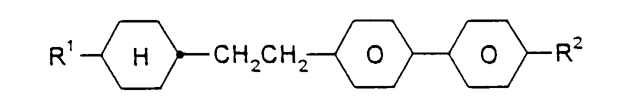 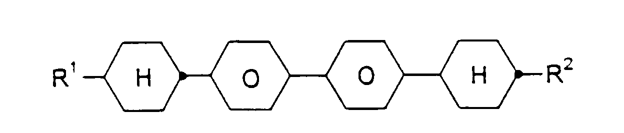 worin R¹ und R² die bei Komponente A angegebenen bevorzugten Bedeutungen haben und eine der beiden 1,4-Phenylengruppen auch durch Fluor substituiert sein kann, und
einen nematischen Phasenbereich von mindestens 60 °C, eine Viskosität von nicht mehr als 30 mPa.s und eine dielektrische Anisotropie von mindestens +5 aufweist, wobei die dielektrischen Anisotropien der Verbindungen und die auf die nematische Flüssigkristallmischung bezogenen Parameter auf eine Temperatur von 20 °C bezogen sind,
mit den Maßgaben, daß
(a) nematische Flüssigkristallmischungen mit einem dielektrischen Verhältnis Δε / ε_{┴} < 2.0 ausgeschlossen sind, wobei Δε die dielektrische Anisotropie und ε_{┴} die Dielektrizitätskonstante in Richtung der kurzen Achse der Flüssigkristallmoleküle bedeutet, und
(b) nematische Flüssigkristallmischungen enthaltend Verbindungen der Formeln 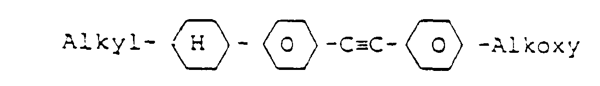 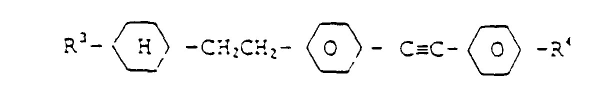 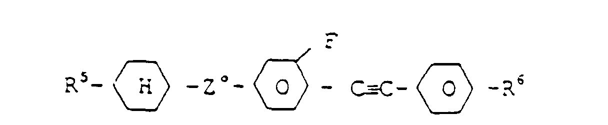 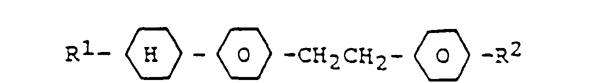 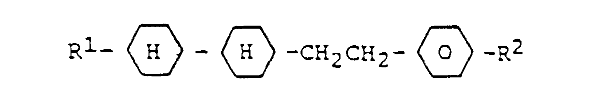 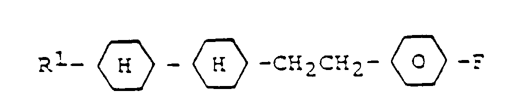 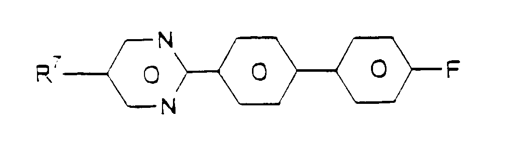 ausgeschlossen sind, worin Alkyl und Alkoxy jeweils geradkettig sind und bis zu 7 C-Atome aufweisen, R³ und R⁴ jeweils eine Alkylgruppe mit 1-8 C-Atomen bedeuten, R⁵ und R⁶ jeweils eine Alkylgruppe mit 1-10 C-Atomen bedeuten, Z^{o} -CH₂CH₂- oder eine Einfachbindung bedeutet, R¹ und R² jeweils unabhängig voneinander jeweils R, bedeuten und R Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können und R⁷ Alkyl mit 1 bis 12 C-Atomen bedeutet.

Gegenstand der Erfindung sind auch entsprechende Flüssigkristallmischungen zur Verwendung in SFA.

Die einzelnen Verbindungen der Formeln T1, T2, Ca, Cb, Cc, Cd, AII, AIV bis AVI, BI bis 3IV und CI bis CIII oder auch andere Verbindungen, die in den erfindungsgemäßen SFA verwendet werden können, sind entweder bekannt, oder sie können analog zu den bekannten Verbindungen hergestellt werden.

Gemische mit Tolanen sind bereits aus GB-A-2 189 785 bekannt. Weitere ähnliche Gemische sind beschrieben in den Dokumenten EP-A-0 316 186, EP-A-0 332 005, EP-A-0 366 985 und EP-A-0 393 493, die Stand der Technik nach Art. 54(3) darstellen.

Bevorzugte erfindungsgemäß verwendbare Flüssigkristallmischungen enthalten eine oder mehrere Verbindungen aus der Gruppe A in einem Anteil von 4 % bis 40 %, vorzugsweise 10 % bis 32 %. Verbindungen der Formeln A IV bis AVI sind bevorzugt. In einer besonders bevorzugten Ausführungsform enthalten die Mischungen gleichzeitig (a) Verbindungen der Formel AV und/oder AVI und (b) Verbindungen der Formel AIV. R¹ und R² bedeuten vorzugsweise jeweils unabhängig voneinander n-Alkyl mit 1 bis 7 C-Atomen oder (trans)-n-Alkenyl mit 3 bis 7 C-Atomen.

Der Anteil der Komponente(n) aus Gruppe B1 beträgt vorzugsweise 5 % bis 45 %, insbesondere bevorzugt ca. 10 % bis 40 %. Komponenten der Formeln BIII und BIV sind bevorzugt. Besonders bevorzugte Verbindungen der Formel BIII sind die jenigen der folgenden Teilformeln: 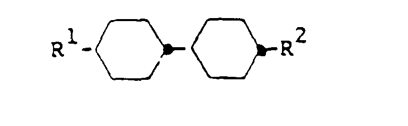 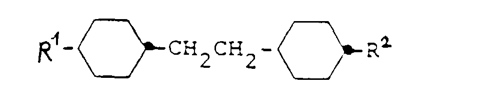 worin
- R¹: CH₃-(CH₂)ₙ-O-, CH₃-(CH₂)ₜ-, trans-H-(CH₂)ᵣ- CH=CH-(CH₂CH₂)ₛ-CH₂O- oder trans-H-(CH₂)ᵣ- CH=CH-(CH₂CH₂)ₛ-,
- R²: CH₃-(CH₂)ₜ-
- n: 1, 2, 3 oder 4
- r: 0, 1, 2 oder 3
- s: 0 oder 1, und
- t: 1, 2, 3 oder 4 ist.

Ferner bevorzugt sind diejenigen der Teilformel 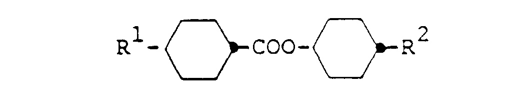 worin R¹ und R² die oben angegebene Bedeutung haben.

Der Anteil der Verbindungen der Formel BIII der oben angegebenen Teilformeln ist vorzugsweise ca. 5 % bis 45 %, insbesondere bevorzugt ca. 10 % bis 35 %. Besonders bevorzugte Verbindungen der Formel BIV sind diejenigen der folgenden Teilformel: 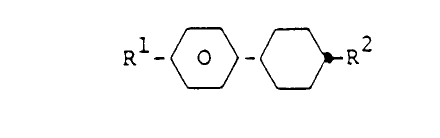 worin
- R¹: CH₃-(CH₂)ₙ-O- oder trans-H-(CH₂)ᵣ-CH=CH-(CH₂CH₂)ₛ-CH₂O- und R² CH₃-(CH₂)ₜ- ist, wobei
- n: 1, 2, 3 oder 4,
- r: 0, 1, 2 oder 3,
- s: 0 oder 1, und
- t: 1, 2, 3 oder 4 ist.

Der Anteil dieser Verbindungen, bzw. der Verbindungen der Formel BIV, ist vorzugsweise ca. 5 % bis 40 %, insbesondere bevorzugt ca. 10 % bis 35 %.

Vorzugsweise enthalten die Mischungen Verbindungen der Formel BIII, insbesondere solche der Teilformel

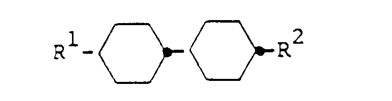

In einer besonders bevorzugten Ausführungsform enthalten die Mischungen gleichzeitig Verbindungen der Formeln BIII und BIV, wobei der Gesamtanteil für Komponenten der Gruppe B1 gewahrt bleibt.

Falls Verbindungen der Formeln BI und/oder BIII vorhanden sind, bedeuten R¹ und R² vorzugsweise jeweils unabhängig voneinander n-Alkyl mit 1 bis 7 C-Atomen oder (trans)-n-Alkenyl mit 3 bis 7 C-Atomen. Z² ist vorzugsweise eine Einfachbindung. BI ist besonders bevorzugt.

Ferner bevorzugt sind erfindungsgemäße Mischungen, die eine oder mehrere Verbindungen der Formel BIV enthalten, worin 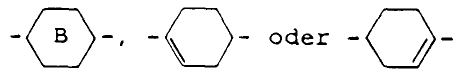 bedeutet und R¹ und R² eine der oben angegebenen bevorzugten Bedeutungen haben, insbesondere bevorzugt n-Alkyl mit 1 bis 7 C-Atomen bedeuten.

In jedem Fall bleibt der Gesamtanteil für Komponenten der Gruppe B1 gewahrt.

Der Anteil der Verbindungen der Gruppe B2 beträgt vorzugsweise ca. 5 % bis 45 %, insbesondere bevorzugt 5 % bis 20 %. Der Anteil (bevorzugte Bereiche) für BV bis BVII ist wie folgt:
- BV: ca. 5 % bis 30 %, vorzugsweise ca. 5 % bis 15 %
- Summe BVI und BVII:: ca. 5 % bis 25 %, vorzugsweise ca. 10 % bis 20 %.

Bevorzugte Verbindungen der Gruppe B2 sind im folgenden angegeben:

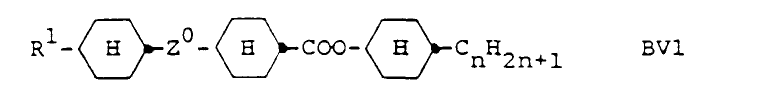

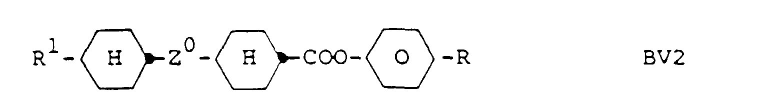

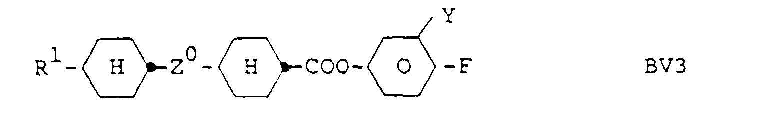

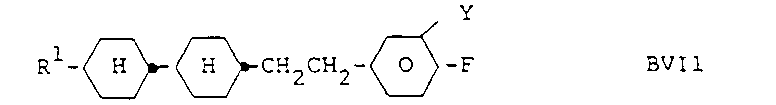

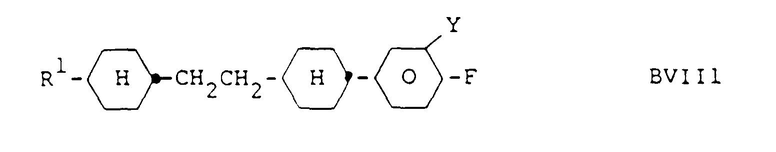

R¹ ist vorzugsweise n-Alkyl mit 1 bis 7 C-Atomen oder (trans)-n-Alkenyl mit 3 bis 7 C-Atomen. Z⁰ ist vorzugsweise eine Einfachbindung. R hat vorzugsweise die oben für R¹ angegebene bevorzugte Bedeutung oder bedeutet Fluor. Y ist vorzugsweise Fluor.

Vorzugsweise enthalten die erfindungsgemäßen Mischungen eine oder mehrere Verbindungen ausgewählt aus der Gruppe bestehend aus BV3, BVI1 und BVII1 in einem Gesamtanteil von ca. 5 bis 35 %.

In einer besonders bevorzugten Ausführungsform enthalten die erfindungsgemäßen Mischungen neben BV3, BVI1, BVII1 und BV2 (R = F) weitere terminal fluorierte Verbindungen zum Beispiel ausgewählt aus der Gruppe bestehend aus: 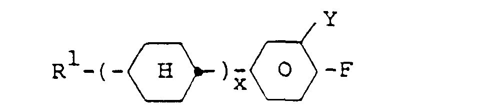 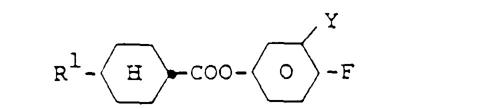 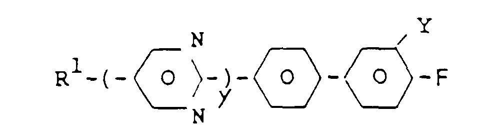 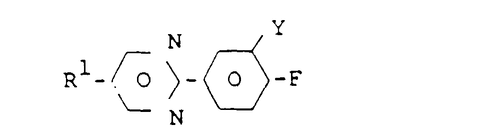 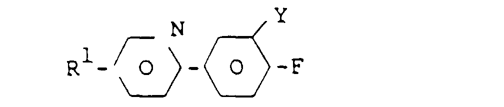 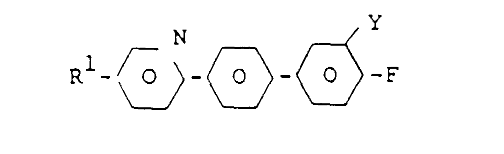 worin R¹ vorzugsweise n-Alkyl mit 1 bis 7 C-Atomen oder (trans)-n-Alkenyl mit 3 bis 7 C-Atomen, X 1 oder 2, y 0 oder 1 und Y H oder F bedeutet.

Der Gesamtanteil aller terminal fluorierter Verbindungen beträgt vorzugsweise ca. 5 % bis 65 %, insbesondere ca. 15 % bis 40 %..

Der Anteil der Verbindungen aus Gruppe B3 beträgt vorzugsweise ca. 5 % bis 30 %, insbesondere bevorzugt ca. 10 % bis 20 %. R¹ ist vorzugsweise n-Alkyl oder n-Alkoxy mit jeweils 1 bis 9 C-Atomen. R² ist vorzugsweise n-Alkyl mit 1 bis 9 C-Atomen. Es können jedoch auch analoge Verbindungen mit Alkenyl- bzw. Alkenyloxy-Gruppen eingesetzt werden. Verbindungen der Formel BVIII sind bevorzugt 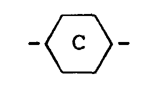 ist vorzugsweise 1,4-Phenylen.

Die erfindungsgemäßen Mischungen enthalten Verbindungen aus mindestens einer der Gruppen B1, B2 und B3. Vorzugsweise enthalten sie eine oder mehrere Verbindungen aus Gruppe B1 und eine oder mehrere Verbindungen aus Gruppe B2 und/oder B3.

Der Anteil der Verbindungen der Komponente C ist vorzugsweise ca. 10 % bis 80 %, insbesondere ca. 20 % bis 70 %. Der Fachmann kann zur Einstellung der gewünschten Schwellenspannung leicht diesen Anteil einstellen, wobei prinzipiell alle üblichen Flüssigkristallverbindungen mit Δε >+ 1,5 verwendet werden können. Falls überwiegend weniger stark positive terminal fluorierte Verbindungen (siehe oben) verwendet werden, bewegt sich der Gesamtanteil mehr im oberen Bereich (ca. 35 % bis 80 %), während bei Verwendung von terminal cyansubstituierten Verbindungen der Anteil niedriger sein kann (ca. 10 % bis 35 %). Besonders bevorzugte Verbindungen sind neben den oben angegebenen terminal fluorierten Verbindungen die hier im folgenden genannten bevorzugten Cyanverbindungen: 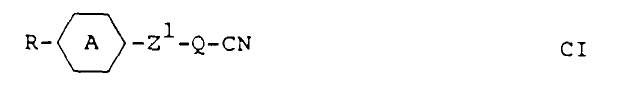 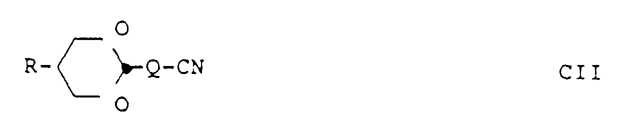 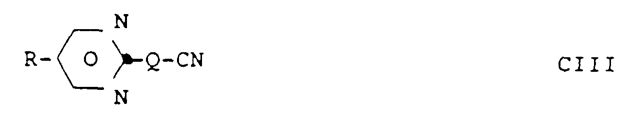 worin
- R: die in Anspruch 1 angegebene Bedeutung hat,
- Q: 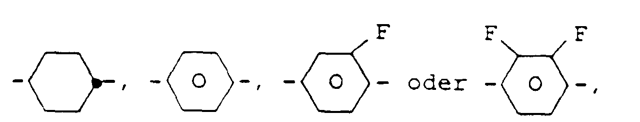
- Z¹: 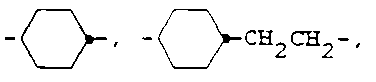 eine Einfachbindung, -CH₂CH₂-, -CO-O- oder -O-CO- und 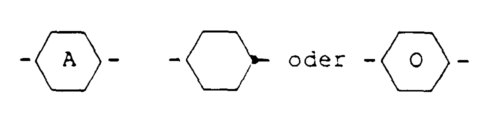 bedeutet.

Einige besonders bevorzugte kleinere Gruppen sind im folgenden angegeben:

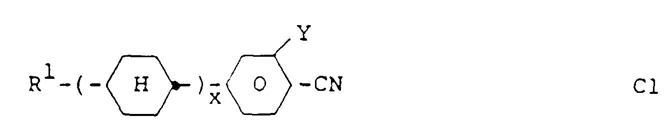

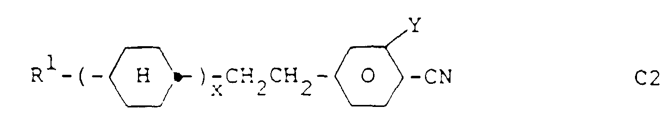

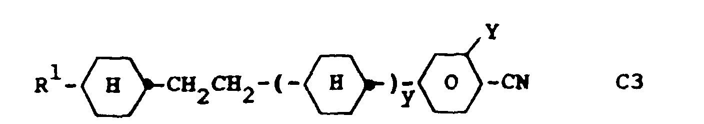

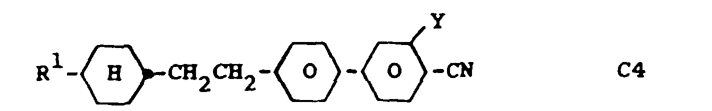

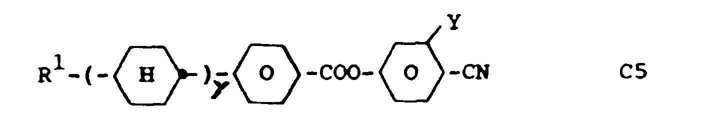

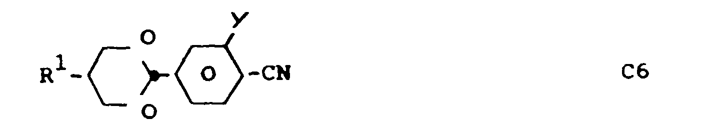

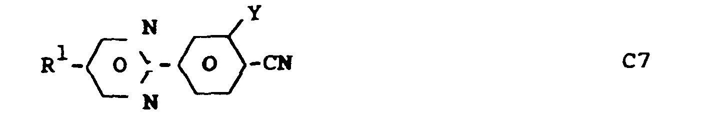

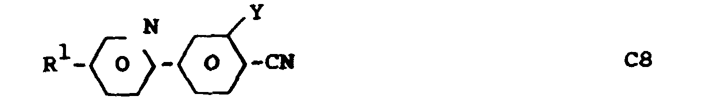

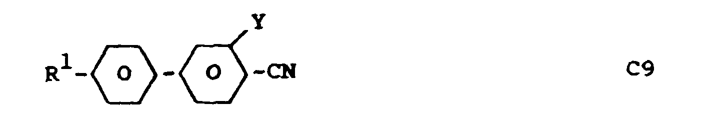

R¹ bedeutet vorzugsweise n-Alkyl mit 1 bis 7 C-Atomen, n-Oxaalkyl mit 3 bis 7 C-Atomen (z.B. n-Alkoxymethyl) oder n-Alkenyl mit 3-7 C-Atomen. Y ist H oder Fluor; X ist 1 oder 2; y ist 0 oder 1.
Ferner bevorzugt sind Gemische enthaltend zusätzlich Isothiocyanate, z.B. der Formel 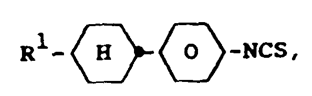 worin R¹ n-Alkyl mit 1 bis 7 C-Atomen oder n-Alkenyl mit 3 bis 7 C-Atomen bedeutet.

In einer besonders bevorzugten Ausführungsform enthalten die erfindungsgemäßen Mischungen vorzugsweise ca. 5 % bis 20 % einer oder mehrerer Verbindungen mit einer dielektrischen Anisotropie von unter -1,5 (Komponente D). Derartige Verbindungen sind bekannt, z.B. Derivate der 2,3-Dicyanhydrochinon oder Cyclohexanderivate mit dem Strukturelement 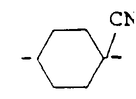 gemäß DE-OS 32 31 707 bzw. DE-OS 34 07 013.

Vorzugsweise werden jedoch Verbindungen mit dem Strukturelement 2,3-Difluor-1,4-phenylen gewählt, z.B. Verbindungen gemäß DE-OS 38 07 801, 38 07 861, 38 07 863, 38 07 864 oder 38 07 908. Besonders bevorzugt sind Tolane mit diesem Strukturelement gemäß der Internationalen Patentanmeldung PCT/DE 88/00133, insbesondere solche der Formeln 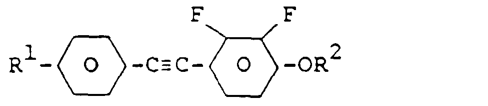 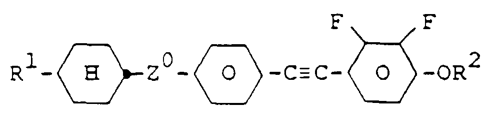 worin R¹ und R² jeweils unabhängig voneinander vorzugsweise n-Alkyl mit 1 bis 7 C-Atomen oder n-Alkenyl mit 3 bis 7 C-Atomen bedeuten und Z⁰ -CH₂CH₂- oder eine Einfachbindung ist.

Die Komponente D bewirkt insbesondere eine Verbesserung der Steilheit der Kennlinie.

In einer besonders bevorzugten Ausführungsform enthalten die Mischungen ca. 5 % bis 35 %, insbesondere bevorzugt ca. 10 % bis 20 % an flüssigkristallinen Tolan-Verbindungen. Hierdurch kann bei geringeren Schichtdicken (ca. 5-6 µm) gearbeitet werden, wodurch die Schaltzeiten deutlich kürzer werden. Besonders bevorzugte Tolane sind im folgenden angegeben: 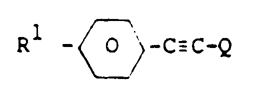 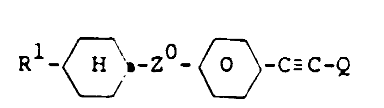
- R¹: ist vorzugsweise n-Alkyl mit 1 bis 7 C-Atomen,
- Z⁰: ist -CH₂CH₂- oder eine Einfachbindung,
- Q: ist 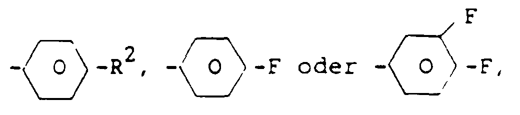 wobei
- R²: n-Alkyl oder n-Alkoxy mit jeweils 1 bis 7 C-Atomen oder n-Alkenyl oder n-Alkenyloxy mit jeweils 3 bis 7 C-Atomen bedeutet.

In einer weiteren besonders bevorzugten Ausführungsform enthalten die Mischungen eine oder mehrere Verbindungen ausgewählt aus der folgenden Gruppe 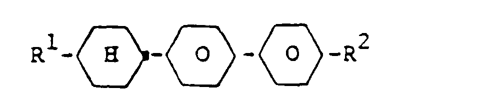 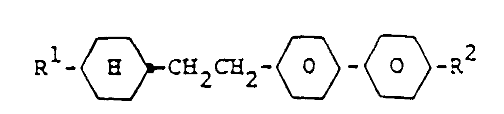 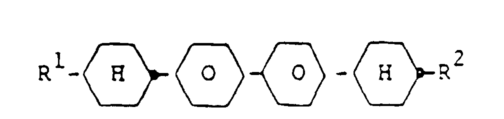 worin R¹ und R² die bei Komponente A angegebenen bevorzugten Bedeutungen haben und eine der beiden 1,4-Phenylengruppen auch durch Fluor substituiert sein kann; der Anteil dieser Verbindungen beträgt 0 % bis 25 %, vorzugsweise ca. 5 % bis 15 %

Im folgenden sind weitere bevorzugte Ausführungsformen angegeben:
- Komponente C enthält Verbindungen, ausgewählt aus der Gruppe C, bestehend aus den Verbindungen der Formeln CI bis CIII: 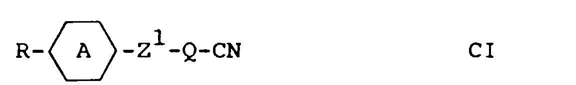 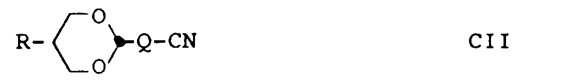 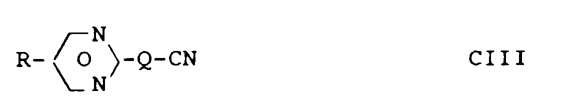 worin
   - R: die in Anspruch 1 angegebene Bedeutung hat,
   - Q: 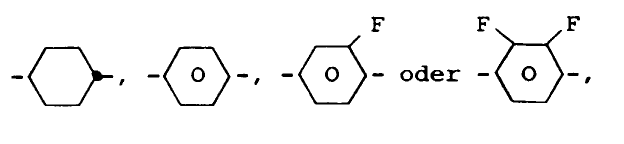
   - Z¹: 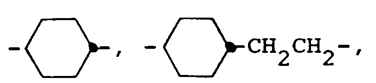 eine Einfachbindung, -CH₂CH₂-, -CO-O- oder -O-CO- und 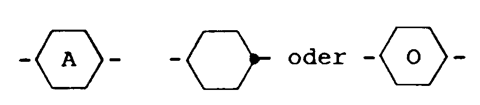 bedeutet.
- die nematische Flüssigkristallmischung ist zusammengesetzt aus 30-60 Gew.% Komponente C, 20-70 Gew.% Verbindungen aus den Gruppen A und B, 0-10 Gew.% Komponente D und einer sich zu 100 Gew.% addierenden Menge der Komponente E.
- Komponente D enthält eine oder mehrere Verbindungen mit einer 1-Cyan-trans-1,4-cyclohexylen-Gruppe oder einer 2,3-Difluor-1,4-phenylen-Gruppe.
- die nematische Flüssigkristallmischung enthält mindestens zwei Verbindungen der Formel AV.
- die nematische Flüssigkristallmischung enthält Verbindungen der Formel BIII.
- die Flüssigkristallmischung enthält Verbindungen der Formel 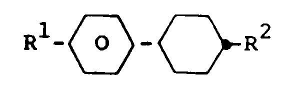 worin R¹ CH₃-(CH₂)ₙ-O- oder trans-H-(CH₂)ᵣ- CH=CH-(CH₂CH₂)ₛ-CH₂-O- und R² CH₃-(CH₂)ₜ- ist, wobei
   - n: 1, 2, 3 oder 4,
   - r: 0, 1, 2 oder 3,
   - s: 0 oder 1, und
   - t: 1, 2, 3 oder 4 ist.
- die Flüssigkristallmischung enthält Verbindungen der Formeln 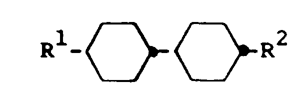 oder 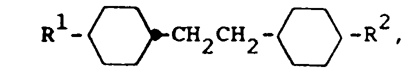 worin
   - R¹: CH₃-(CH₂)ₙ-O-, CH₃(CH₂)ₜ-, trans-H-(CH₂)ᵣ- CH=CH-(CH₂CH₂)ₛ-CH₂O- oder trans-H-(CH₂)ᵣ-CH=CH-(CH₂CH₂)ₛ-, und
   - R²: CH₃-(CH₂)ₜ- ist,
   wobei n, r, s und t die in Anspruch a angegebene Bedeutung haben.
- Komponente C enthält eine oder mehrere Verbindungen mit einer 4-Fluorphenyl-Gruppe oder einer 3,4-Difluorphenyl-Gruppe.
- die Flüssigkristallmischung enthält mindestens eine Verbindung aus folgender Gruppe 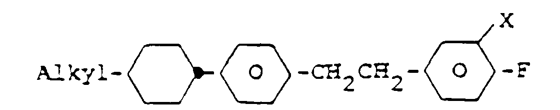 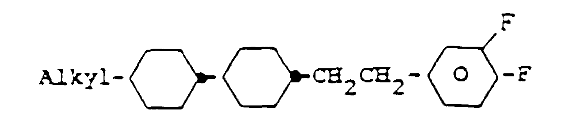 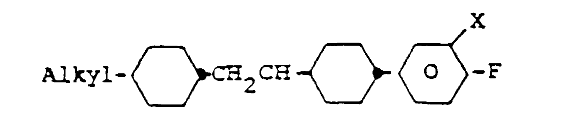 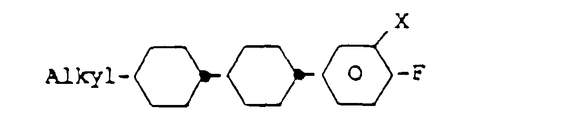 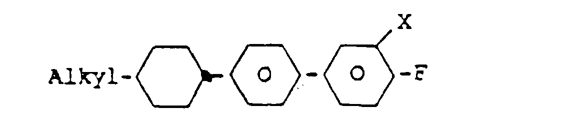 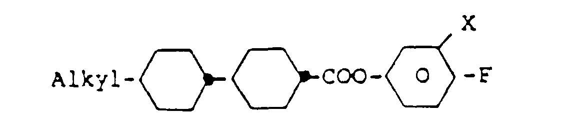 worin Alkyl eine geradkettige Alkylgruppe mit 2-7 C-Atomen und X H oder F ist.
- die Flüssigkristallmischung enthält eine oder mehrere Verbindungen, worin R eine trans-Alkenylgruppe oder eine trans-Alkenyloxygruppe ist.

Für die Komponente E stehen dem Fachmann eine Vielzahl, zum Teil kommerziell erhältlicher chiraler Dotierstoffe zur Verfügung. Deren Wahl ist an sich nicht kritisch.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 360° gegeneinander verdreht ist, entspricht der für derartige Anzeigeelemente üblichen Bauweise. Dabei ist der Begriff der üblichen Bauweise hier weit gefaßt und umfaßt auch alle Abwandlungen und Modifikationen der Supertwistzelle, insbesondere auch Matrix-Anzeigeelemente sowie die zusätzliche Magnete enthaltenden Anzeigeelemente nach der DE-OS 2 748 738. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigeelemente zu den bisher üblichen auf der Basis der verdrillten nematischen Zelle besteht jedoch in der Wahl der Flüssigkristallkomponenten der Flüssigkristallschicht.

Die Herstellung der erfindungsgemäß verwendbaren Flüssigkristallmischungen erfolgt in an sich üblicher weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

Die folgenden Beispiele sollen die Erfindung erläutern, ohne sie zu begrenzen.

Es bedeutet:
- S-N: Phasenübergangs-Temperatur smektisch-nematisch,
- Klp.: Klärpunkt,
- Visk.: Viskosität (m Pa.s),
- Tₒₙ: Zeit vom Einschalten bis zur Erreichung von 90 % des maximalen Kontrastes
- T_{off}: Zeit vom Ausschalten bis zur Erreichung von 10 % des maximalen Kontrastes

Dis SFA wird im Multiplexbetrieb angesteuert (Multiplexverhältnis) 1:100, Bias 1:11, Betriebsspannung 18,5 Volt).

Vor und nachstehend sind alle Temperaturen in °C angegeben. Die Prozentzahlen sind Gewichtsprozente. Die Werte für die Schaltzeiten und Viskositäten beziehen sich auf 20 °C.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Rest CₙH₂ₙ₊₁ und CₘH₂ₘ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹ , R² , L¹ , L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nOmFF | CₙH₂ₙ₊₁ | OCₘH₂ₘ₊₁ | F | F |
| nmF | CₙH₂ₙ₊₁ | CₘH₂ₘ₊₁ | F | H |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-CₛH₂ₛ- | CN | H | H |
| nNF | CₙH₂ₙ₊₁ | CN | F | H |
| nAm | CₙH₂ₙ₊₁ | COOCₘH₂ₘ₊₁ | H | H |

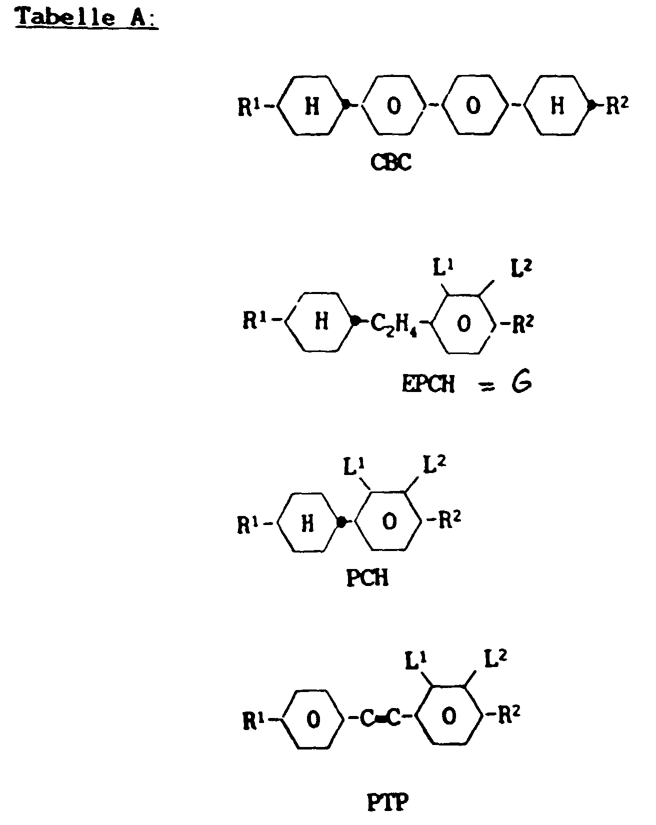

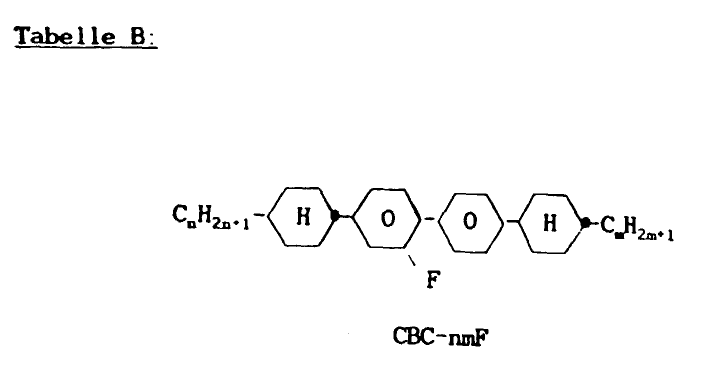

Die folgende Flüssigkristallmischungen zeigt in SFA vorteilhafte Eigenschaften

### Beispiel 1

| | |
|---|---|
| PCH-2 | 5.00 |
| PCH-3 | 20.00 |
| PCH-5 | 12.00 |
| G9 | 13.00 |
| G12 | 11.00 |
| G15 | 11.00 |
| PTP-102 | 5.00 |
| CBC-33 | 6.00 |
| CBC-53 | 6.00 |
| CBC-33F | 5.CC |
| CBC-53F | 6.00 |

## Patentansprüche

1. Supertwist-Flüssigkristallanzeige mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad,
- einem Verdrillungswinkel der Flüssigkristallmischung in der Zelle von Orientierungsschicht zu Orientierungsschicht dem Betrag nach zwischen 160 und 360°, dadurch gekennzeichnet, daß die nematische Flüssigkristallmischung
a) mindestens eine Komponente enthält, ausgewählt aus der Gruppe T, bestehend aus Verbindungen der Formeln T1 und T2: 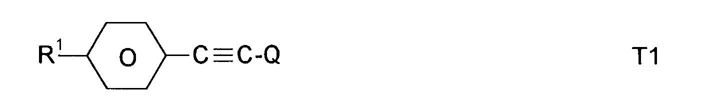 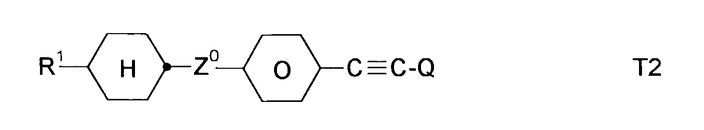 worin 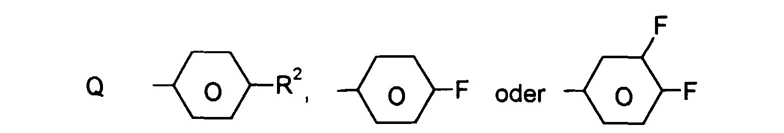 bedeutet,
R¹ und R² jeweils unabhängig voneinander R bedeuten, wobei R Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können, und Z⁰ -CH₂CH₂- oder eine Einfachbindung bedeutet, und die 1,4-Phenylenringe auch lateral durch Fluor substituiert sein können,
b) 10-80 Gew.-% einer flüssigkristallinen Komponente C enthält, bestehend aus einer oder mehreren Verbindungen mit einer dielektrischen Anisotropie von über +1,5, wobei Komponente C mindestens eine Verbindung, ausgewählt aus der Gruppe bestehend aus den Verbindungen Ca bis Cd enthält: 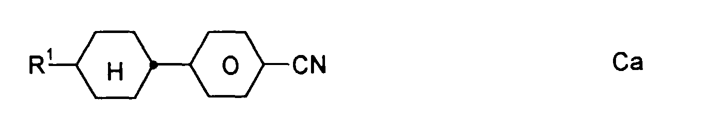 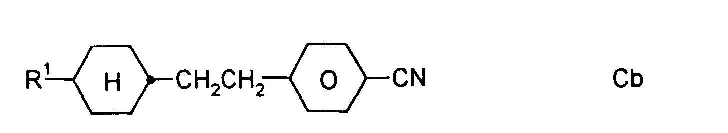 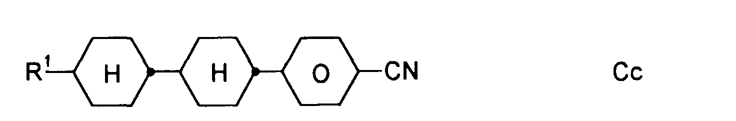 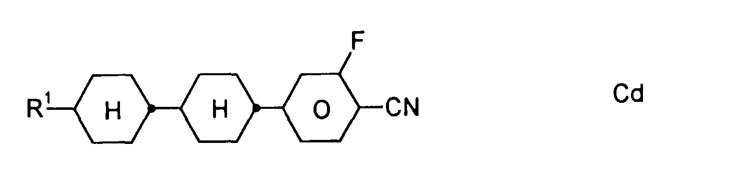 wobei R¹ die oben angegebene Bedeutung hat,
c) 0-20 Gew.-% einer flüssigkristallinen Komponente D enthält, bestehend aus einer oder mehreren Verbindungen mit einer dielektrischen Anisotropie von unter -1,5, und
d) eine optisch aktive Komponente E in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt,
zusätzlich mindestens eine Komponente enthält, ausgewählt aus der Gruppe A, bestehend aus Verbindungen der Formeln All und AIV bis AVI: 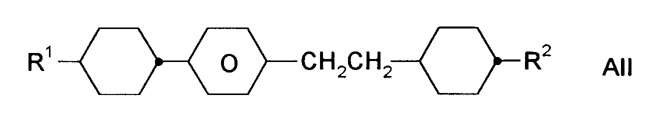 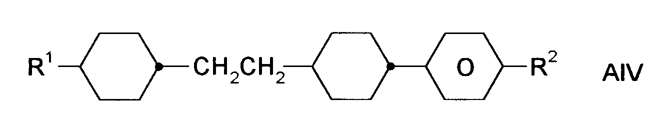 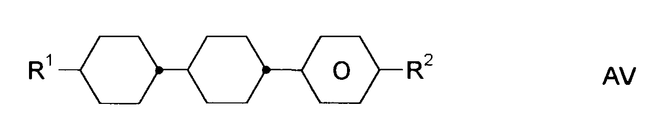 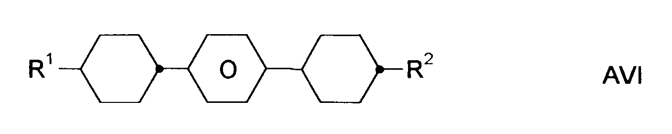 worin R¹ und R² jeweils unabhängig voneinander jeweils R bedeuten und
R Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können,
und/oder ausgewählt aus der Gruppe B1, bestehend aus den Verbindungen der Formeln Bl bis BIV: 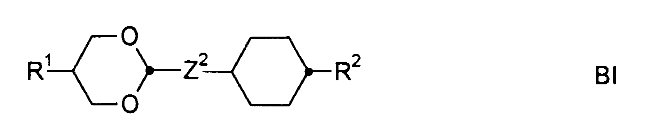 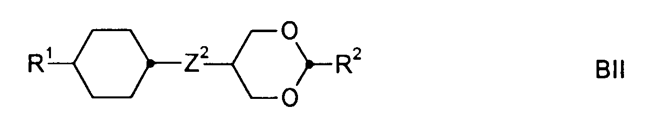 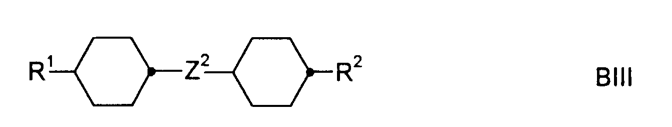 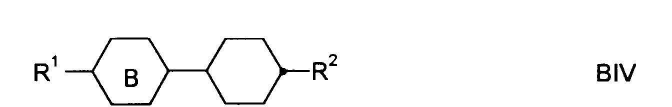 worin R¹ und R² jeweils unabhängig voneinander die für R angegebene Bedeutung haben, Z² -CH₂CH₂-, -CO-O-, -O-CO- oder eine Einfachbindung, und 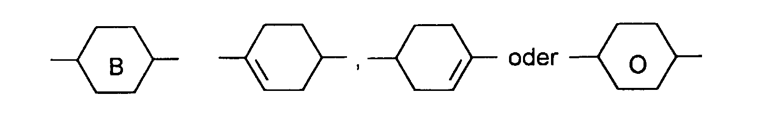 bedeutet,
und/oder mindestens eine Komponente enthält, ausgewählt aus der Gruppe B2, bestehend aus den Verbindungen der Formeln BV bis BVII: 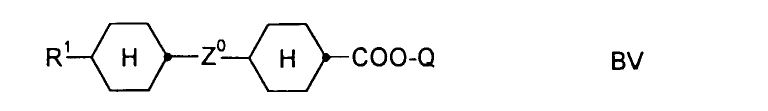 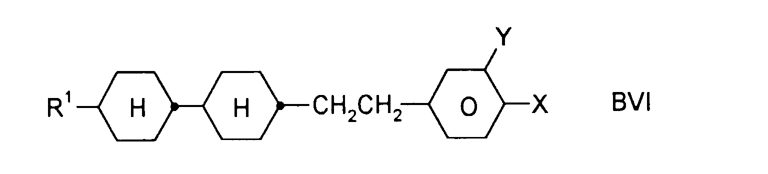 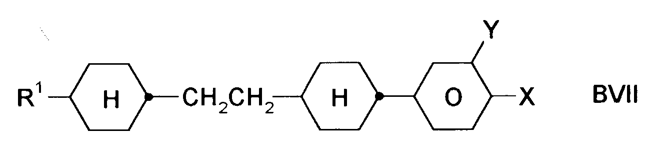 worin R¹ die für R angegebene Bedeutung hat,
Z⁰ -CH₂CH₂- oder eine Einfachbindung ist und
Q 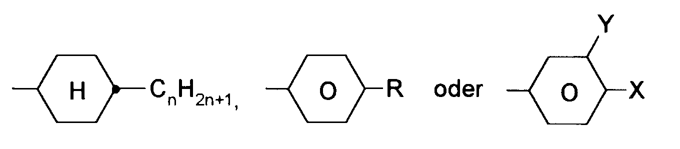
bedeutet,
wobei n 1 bis 9 ist, X CN oder F und Y H oder F bedeuten,
und/oder mindestens eine Komponente enthält, ausgewählt aus der Gruppe B3, bestehend aus den Verbindungen der Formeln BVIII und BIX: 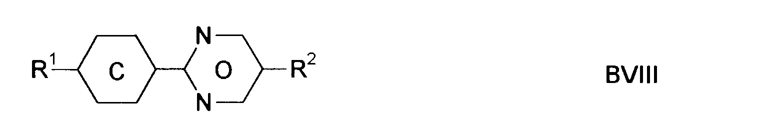 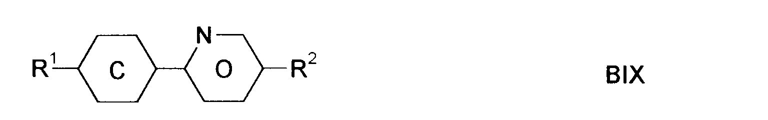 wobei R¹ und R² jeweils unabhängig voneinander die für R angegebene Bedeutung haben, und 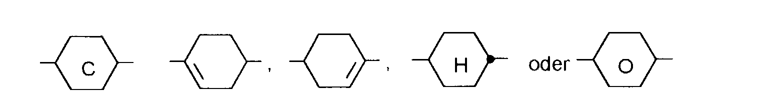 bedeutet,
und/oder eine oder mehrere Verbindungen ausgewählt aus der folgenden Gruppe enthält: 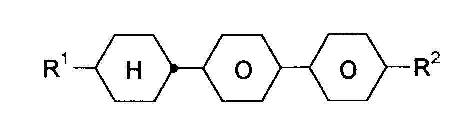 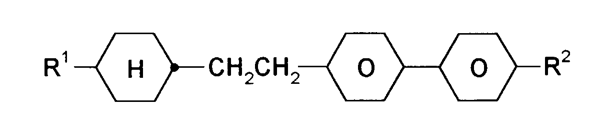 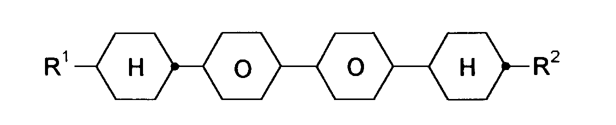 worin R¹ und R² die bei Komponente A angegebenen bevorzugten Bedeutungen haben und eine der beiden 1,4-Phenylengruppen auch durch Fluor substituiert sein kann, und
einen nematischen Phasenbereich von mindestens 60 °C, eine Viskosität von nicht mehr als 30 mPa · s und eine dielektrische Anisotropie von mindestens +5 aufweist, wobei die dielektrischen Anisotropien der Verbindungen und die auf die nematische Flüssigkristallmischung bezogenen Parameter auf eine Temperatur von 20 °C bezogen sind,
mit den Maßgaben, daß
(a) nematische Flüssigkristallmischungen mit einem dielektrischen Verhältnis Δε / ε_{┴} < 2.0 ausgeschlossen sind, wobei Δε die dielektrische Anisotropie und ε_{┴} die Dielektrizitätskonstante in Richtung der kurzen Achse der Flüssigkristallmoleküle bedeutet, und
(b) nematische Flüssigkristallmischungen enthaltend Verbindungen der Formeln 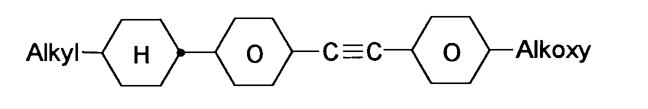 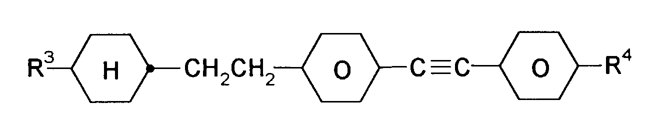 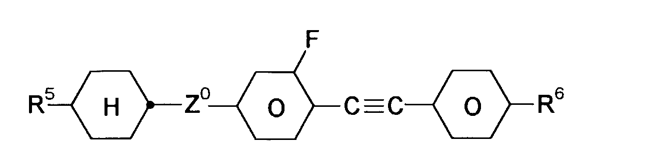 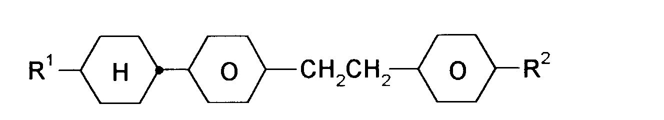 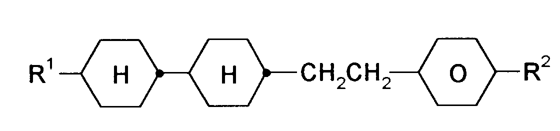 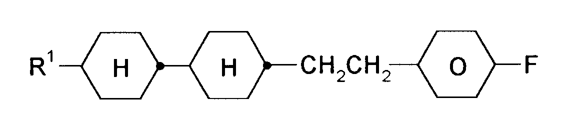 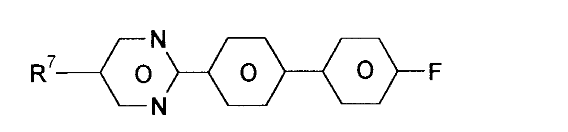 ausgeschlossen sind, worin
Alkyl und Alkoxy jeweils geradkettig sind und bis zu 7 C-Atome aufweisen,
R³ und R⁴ jeweils eine Alkylgruppe mit 1-8 C-Atomen bedeuten,
R⁵ und R⁶ jeweils eine Alkylgruppe mit 1-10 C-Atomen bedeuten,
Z⁰ -CH₂CH₂- oder eine Einfachbindung bedeutet,
R¹ und R² jeweils unabhängig voneinander jeweils R bedeuten und R Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können, und
R⁷ Alkyl mit 1 bis 12 C-Atomen bedeutet.

2. Anzeige nach Anspruch 1, dadurch gekennzeichnet, daß die Flüssigkristallmischung 5-15 % an Verbindungen der folgenden Gruppe enthält: 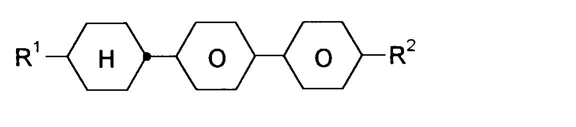 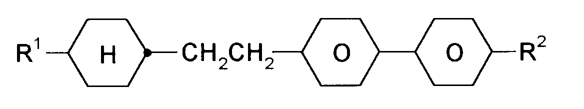 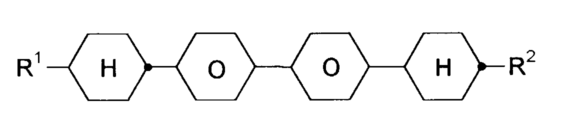 worin R¹ und R² die bei Komponente A angegebenen bevorzugten Bedeutungen haben und eine der beiden 1,4-Phenylengruppen auch durch Fluor substituiert sein kann.

3. Anzeigen nach Anspruch 1 oder 2, dadurch gekennzeichnet, daß Komponente C Verbindungen enthält, ausgewählt aus der Gruppe C, bestehend aus den Verbindungen der Formeln Cl bis CIII: 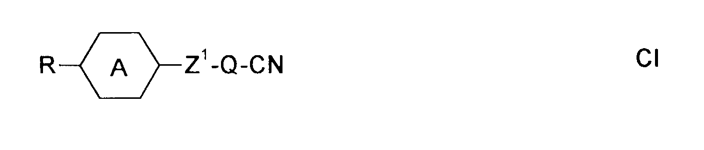 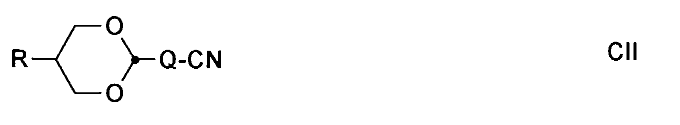 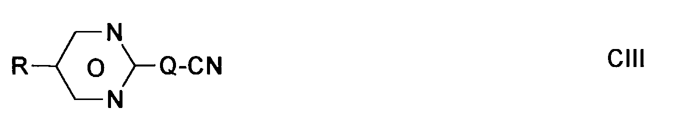 worin
R die in Anspruch 1 angegebene Bedeutung hat,
Q 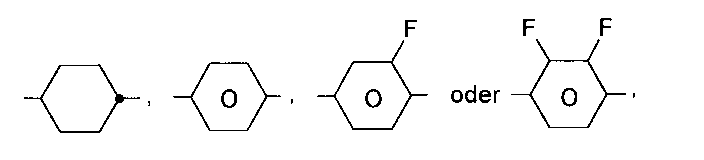
Z¹ 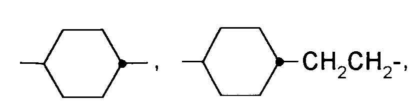 eine Einfachbindung, -CH₂CH₂-, -CO-O- oder -O-CO- und 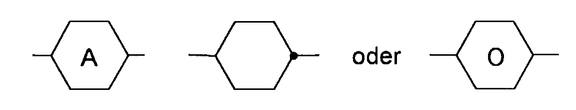 bedeutet.

4. Anzeige nach mindestens einem der Ansprüche 1 bis 3, dadurch gekennzeichnet, daß die nematische Flüssigkristallmischung zusammengesetzt ist aus 30-60 Gew.-% Komponente C, 20-70 Gew.-% Verbindungen aus den Gruppen A und B, 0-10 Gew.-% Komponente D und einer sich zu 100 Gew.-% addierenden Menge der Komponente E.

5. Anzeige nach mindestens einem der Ansprüche 1 bis 4, dadurch gekennzeichnet, daß Komponente D eine oder mehrere Verbindungen mit einer 1-Cyan-trans-1,4-cyclohexylen-Gruppe oder einer 2,3-Difluor-1,4-phenylen-Gruppe enthält.

6. Anzeige nach mindestens einem der Ansprüche 1 bis 5, dadurch gekennzeichnet, daß die nematische Flüssigkristallmischung mindestens zwei Verbindungen der Formel AV enthält.

7. Anzeige nach mindestens einem der Ansprüche 1 bis 6, dadurch gekennzeichnet, daß die nematische Flüssigkristallmischung Verbindungen der Formel BIII enthält.

8. Anzeige nach Anspruch 7, dadurch gekennzeichnet, daß die Flüssigkristallmischung Verbindungen der Formel 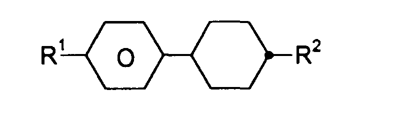 enthält,
worin
R¹ CH₃-(CH₂)ₙ-O- oder trans-H-(CH₂),-CH=CH-(CH₂CH₂)ₛ-CH₂-O-
und
R² CH₃-(CH₂)ₜ- ist,
wobei
n 1, 2, 3 oder 4,
r 0, 1, 2 oder 3,
s 0 oder 1, und
t 1, 2, 3 oder 4 ist.

9. Anzeige nach Anspruch 7 oder 8, dadurch gekennzeichnet, daß die Flüssigkristallmischung Verbindungen der Formeln 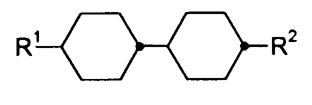 oder 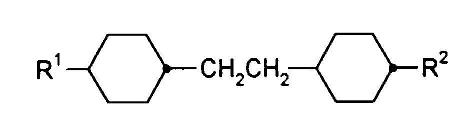 enthält, worin
R¹ CH₃-(CH₂)ₙ-O-,
CH₃-(CH₂)ₜ-,
trans-H-(CH2),-CH=CH-(CH2CH2),-CH2-O- oder
trans-H-(CH₂),-CH=CH-(CH2CH2),-, und
R² CH₃-(CH₂)ₜ- ist,
wobei n, r, s und t die in Anspruch 8 angegebene Bedeutung haben.

10. Anzeige nach mindestens einem der Ansprüche 1 bis 9, dadurch gekennzeichnet, daß Komponente C eine oder mehrere Verbindungen mit einer 4-Fluorphenyl-Gruppe oder einer 3,4-Difluorphenyl-Gruppe enthält.

11. Anzeige nach Anspruch 10, dadurch gekennzeichnet, daß die Flüssigkristallmischung mindestens eine Verbindung aus folgender Gruppe 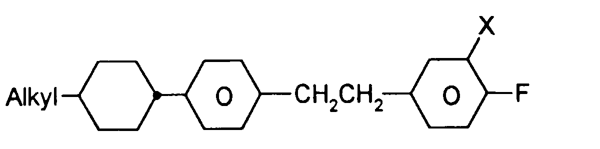 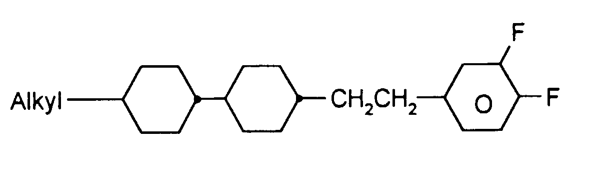 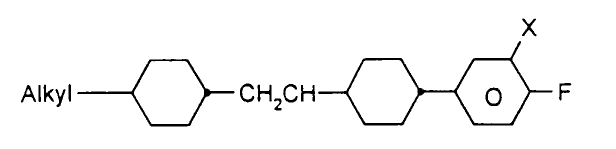 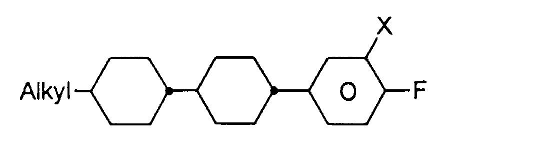 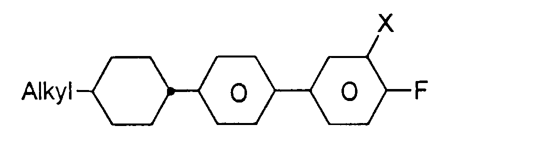 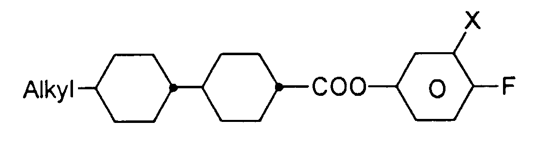 enthält, worin Alkyl eine geradkettige Alkylgruppe mit 2-7 C-Atomen und X H oder F ist.

12. Anzeige nach mindestens einem der Ansprüche 1 bis 11, dadurch gekennzeichnet, daß die Flüssigkristallmischung eine oder mehrere Verbindungen enthält, worin R eine trans-Alkenylgruppe oder eine trans-Alkenyloxygruppe ist.

13. Nematische Flüssigkristallmischung der in mindestens einer der Ansprüche 1 bis 12 definierten Zusammensetzung.

## Claims

1. Supertwist liquid-crystal display having
- two plane-parallel outer plates which, with a frame, form a cell,
- a nematic liquid-crystal mixture of positive dielectric anisotropy in the cell,
- electrode layers with overlying alignment layers on the insides of the outer plates,
- a pre-tilt angle between the long axis of the molecules at the surface of the outer plates and the outer plates of from about 1 degree to 30 degrees,
- a twist angle of the liquid-crystal mixture in the cell from alignment layer to alignment layer having a value of from 160 to 360°,
characterized in that the nematic liquid-crystal mixture comprises
a) at least one component selected from Group T consisting of compounds of the formulae T1 and T2: 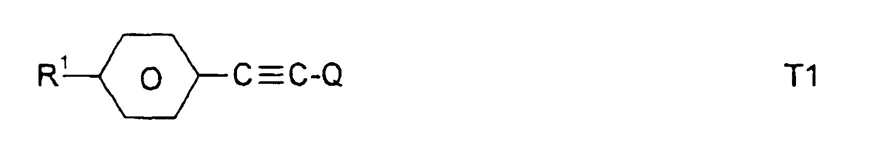 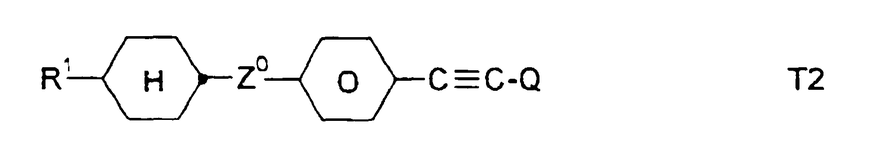 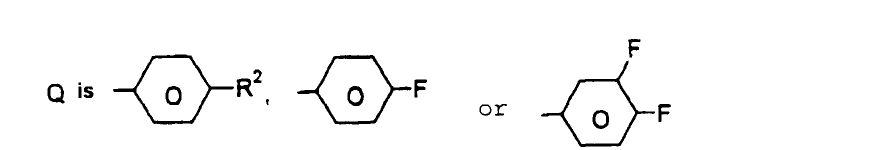 is
R¹ and R², each independently of one another, are R, in which R is alkyl having 1-12 carbon atoms and in which one or two non-adjacent CH2 groups may be replaced by -O-, -CH=CH-, -CO-, -O-CO- or -CO-O-, and Z° is -CH₂CH₂- or a single bond, and the 1,4-phenylene rings may also be laterally substituted by fluorine,
a) 10-80% by weight of a liquid-crystalline Component C consisting of one or more compounds having a dielectric anisotropy of greater than +1.5, where Component C comprises at least one compound selected from the group consisting of the compounds Ca to Cd: 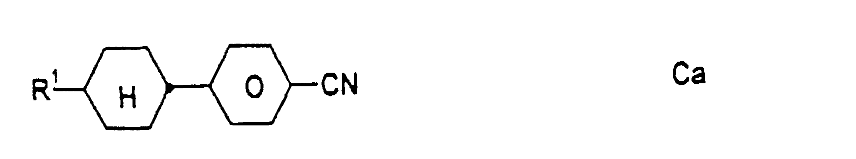 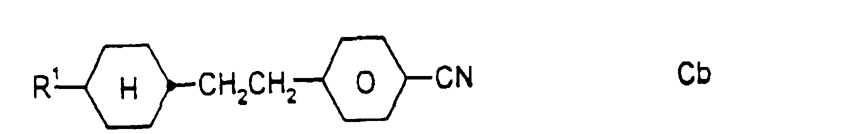 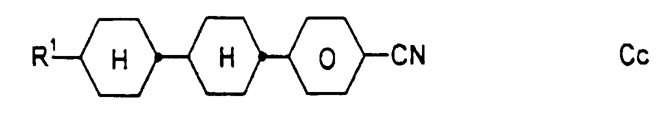 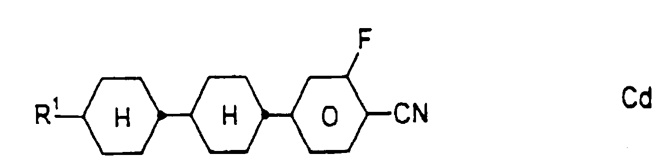 where R¹ is as defined above,
b) 0-20% by weight of a liquid-crystalline Component D consisting of one or more compounds having a dielectric anisotropy of less than -1.5, and
c) an optically active Component E in such an amount that the ratio between the layer thickness (separation of the plane-parallel outer plates) and the natural pitch of the chiral nematic liquid-crystal mixture is from about 0.2 to 1.3,
additionally comprises at least one component selected from Group A consisting of compounds of the formulae AII and AIV to AVI: 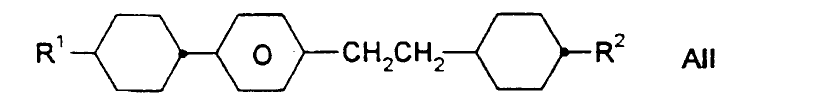 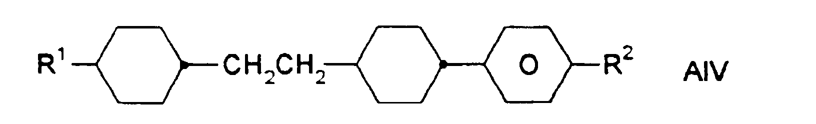 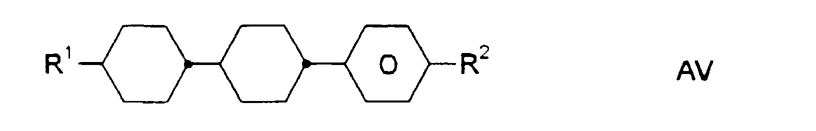 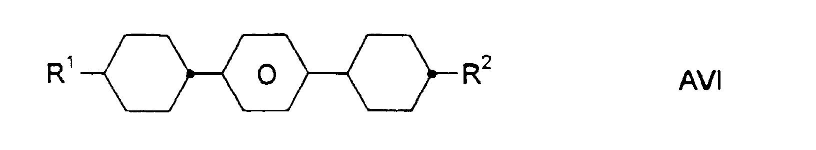 in which R¹ and R², each independently of one another, are each R, and
R is alkyl having 1-12 carbon atoms in which, in addition, one or two non-adjacent CH₂ groups may be replaced by -O-, -CH=CH-, -CO-, -O-CO- or -CO-O-,
and/or selected from Group B1 consisting of the compounds of the formulae BI to BIV: 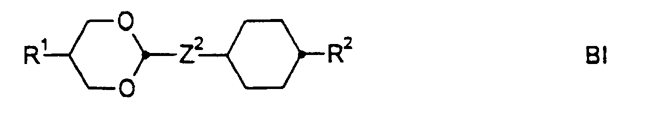 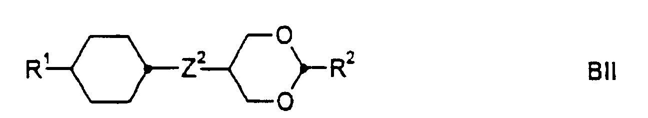 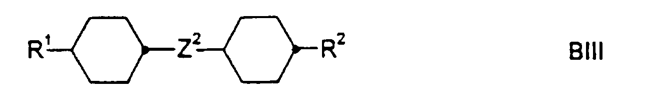 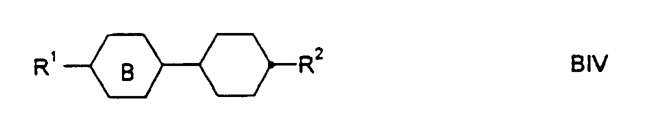 in which R¹ and R², each independently of one another, are as defined for R, Z² is -CH₂CH₂-, -CO-O-, -O-CO- or a single bond, and 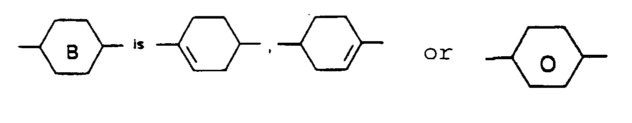 and/or at least one component selected from Group B2 consisting of the compounds of the formulae BV to BVII: 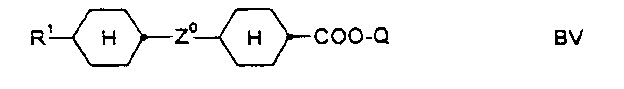 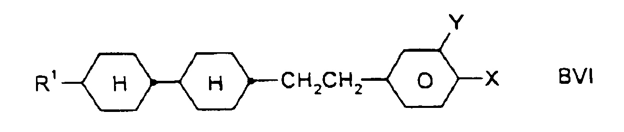 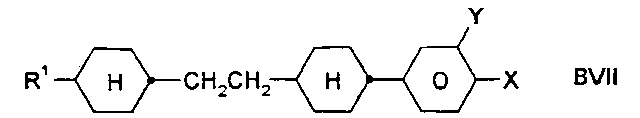 in which R¹ is as defined for R,
Z⁰ is -CH₂CH₂- or a single bond, and
Q is 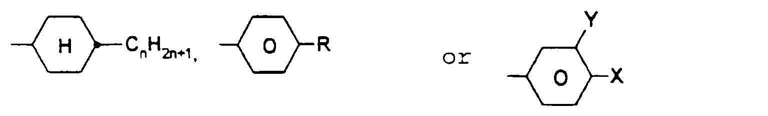
where n is from 1 to 9, X is CN or F, and Y is H or F,
and/or at least one component selected from Group B3 consisting of the compounds of the formulae BVIII and BVIX: 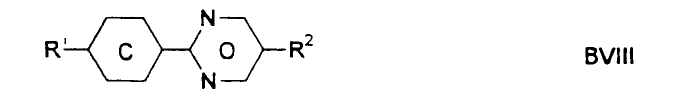 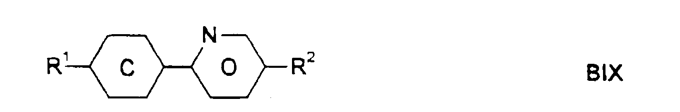 where R¹ and R², each independently of one another, are as defined for R, and 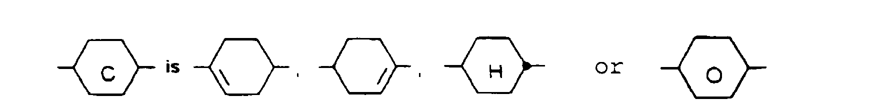 and/or one or more compounds selected from the following group: 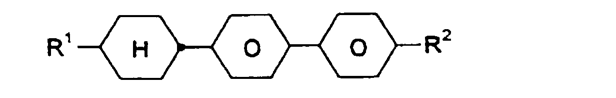 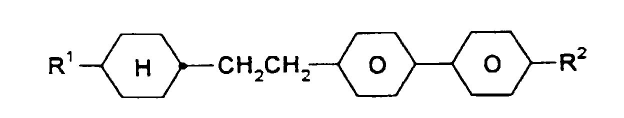 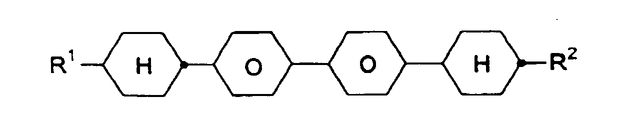 in which R¹ and R² have the preferred meanings given for component A, and one of the two 1,4-phenylene groups may also be substituted by fluorine, and
has a nematic phase range of at least 60°C, a viscosity of not greater than 30 mPa · s and a dielectric anisotropy of at least +5, where the dielectric anisotropies of the compounds and the parameters relating to the nematic liquid-crystal mixture are based on a temperature of 20°C,
with the provisos that
(a) nematic liquid-crystal mixtures having a dielectric ratio Δε/ε_{┴} < 2.0 are excluded, where Δε denotes the dielectric anisotropy and ε_{┴} denotes the dielectric constant in the direction of the short axis of the liquid-crystal molecules, and
(b) nematic liquid-crystal mixtures comprising compounds of the formulae 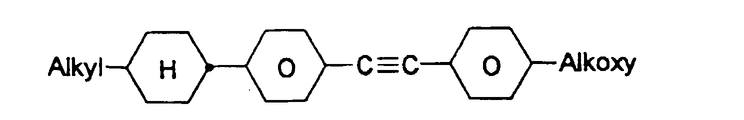 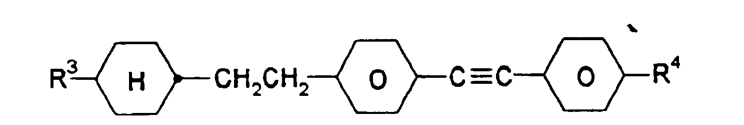 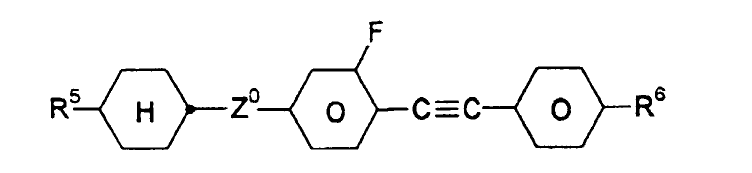 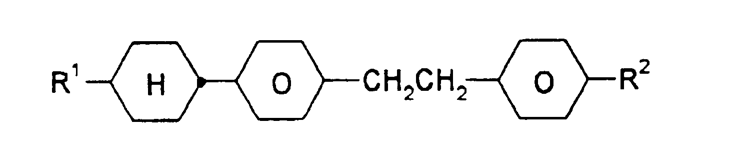 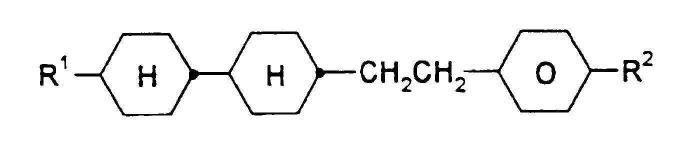 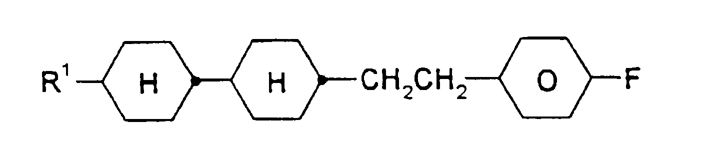 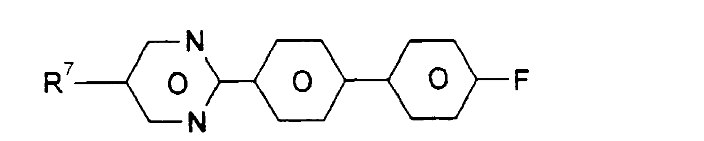 in which
Alkyl and Alkoxy are each straight-chain and have up to 7 carbon atoms,
R³ and R⁴ are each an alkyl group having 1-8 carbon atoms,
R⁵ and R⁶ are each an alkyl group having 1-10 carbon atoms,
Z⁰ is -CH₂CH₂- or a single bond,
R¹ and R², each independently of one another, are each R, and R is alkyl having 1-12 carbon atoms, in which, in addition, one or two non-adjacent CH₂ groups may be replaced by -O-, -CH=CH-, -CO-, -O-CO- or -CO-O-, and
R⁷ is alkyl having 1 to 12 carbon atoms
are excluded.

2. Display according to Claim 1, characterized in that the liquid-crystal mixture comprises 5-15% of compounds of the following group: 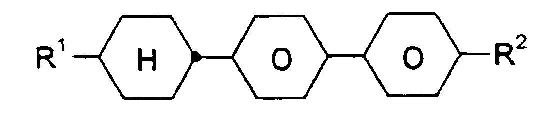 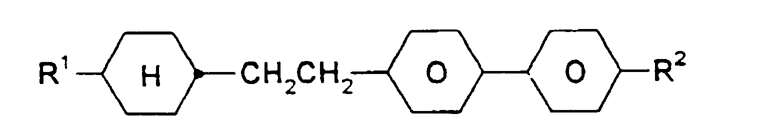 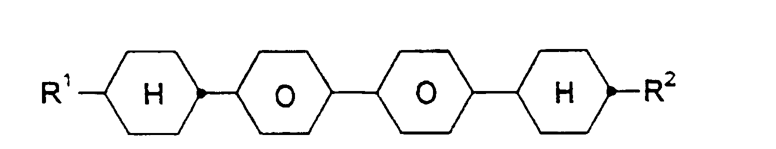 in which R¹ and R² have the preferred meanings given for Component A, and one of the two 1,4-phenylene groups may also be substituted by fluorine.

3. Display according to Claim 1 or 2, characterized in that Component C comprises compounds selected from Group C consisting of the compounds of the formulae CI to CIII: 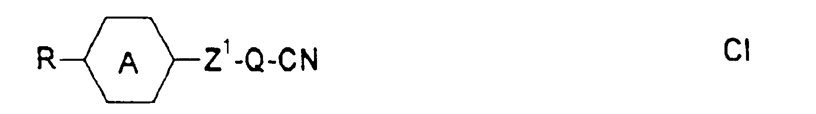 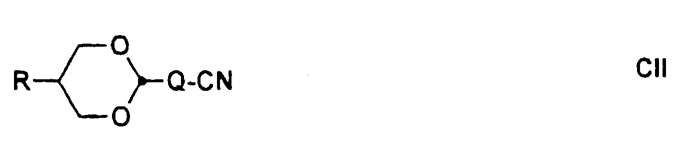 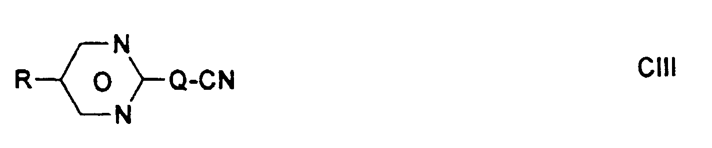 in which
R is as defined in Claim 1,
Q is 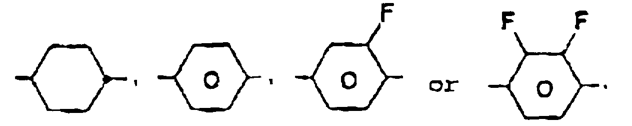
Z¹ is 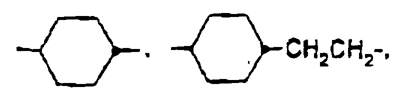 a single bond, -CH₂CH₂-, -CO-O- or -O-CO-, and

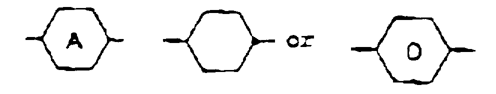

4. Display according to at least one of Claims 1 to 3, characterized in that the nematic liquid-crystal mixture is composed of 30-60% by weight of Component C, 20-70% by weight of compounds from Groups A and B, 0-10% by weight of Component D, and an amount of Component E which adds up to 100% by weight.

5. Display according to at least one of Claims 1 to 4, characterized in that Component D comprises one or more compounds containing a 1-cyano-trans-1,4-cyclohexylene group or a 2,3-difluoro-1,4-phenylene group.

6. Display according to at least one of Claims 1 to 5, characterized in that the nematic liquid-crystal mixture comprises at least two compounds of the formula AV.

7. Display according to at least one of Claims 1 to 6, characterized in that the nematic liquid-crystal mixture comprises compounds of the formula BIII.

8. Display according to Claim 7, characterized in that the liquid-crystal mixture comprises compounds of the formula 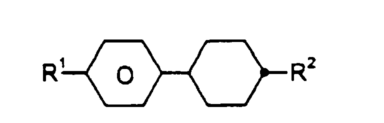 in which
R¹ is CH₃-(CH₂)ₙ-O- or trans-H-(CH₂)ᵣ-CH=CH-(CH₂CH₂)ₛ-CH₂-O-
and
R² is CH₃-(CH₂)ₜ-,
where
n is 1, 2, 3 or 4,
r is 0, 1, 2 or 3,
s is 0 or 1, and
t is 1, 2, 3 or 4.

9. Display according to Claim 7 or 8, characterized in that the liquid-crystal mixture comprises compounds of the formulae 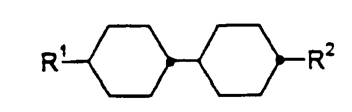 or 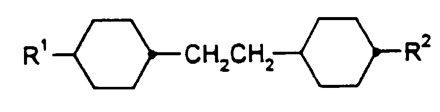 in which
R¹ is CH₃-(CH₂)ₙ-O-,
CH₃-(CH₂)ₜ-,
trans-H-(CH₂)ᵣ-CH=CH-(CH₂CH₂)ₛ-CH₂-O- or
trans-H-(CH₂)ᵣ-CH=CH-(CH₂CH₂)ₛ-, and
R² is CH₃-(CH₂)ₜ-,
where n, r, s and t are as defined in Claim 8.

10. Display according to at least one of Claims 1 to 9, characterized in that Component C comprises one or more compounds containing a 4-fluorophenyl group or a 3,4-difluorophenyl group.

11. Display according to Claim 10, characterized in that the liquid-crystal mixture comprises at least one compound from the following group: 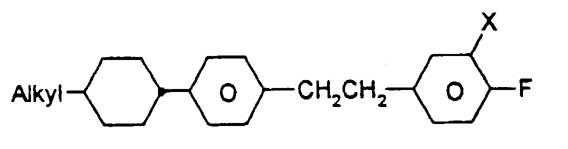 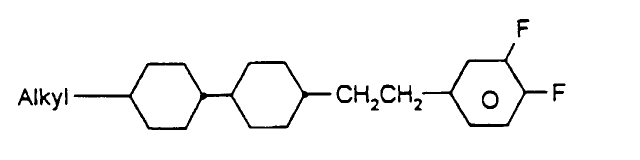 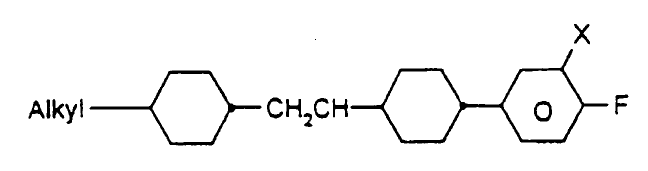 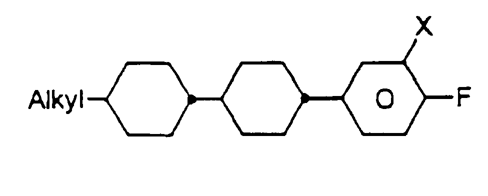 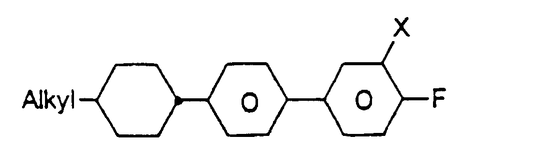 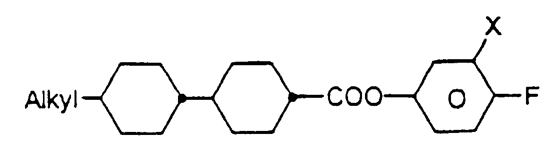 in which Alkyl is a straight-chain alkyl group having 2-7 carbon atoms, and X is H or F.

12. Display according to at least one of Claims 1 to 11, characterized in that the liquid-crystal mixture comprises one or more compounds in which R is a trans-alkenyl group or a trans-alkenyloxy group.

13. Nematic liquid-crystal mixture of the composition defined in at least one of Claims 1 to 12.

## Revendications

1. Afficheur à cristaux liquides supertwistés présentant :
◆ deux plaques de support à faces planes et parallèles qui, avec un bord, forment une cellule,
◆ une composition de cristaux liquides nématiques se trouvant dans la cellule et ayant une anisotropie diélectrique positive,
◆ des couches d'électrodes recouvertes par des couches d'orientation sur la face interne des plaques de support,
◆ un angle d'inclinaison entre l'axe longitudinal des molécules sur la surface des plaques de support et les plaques de support compris entre environ 1 et environ 30°,
◆ un angle de torsion de la composition de cristaux liquides dans la cellule d'une couche d'orientation à l'autre compris par module entre 160 et 360°,
caractérisé en ce que la composition de cristaux liquides nématiques contient :
a) au moins un composant choisi dans le groupe T constitué des composés de formules T1 et T2 : 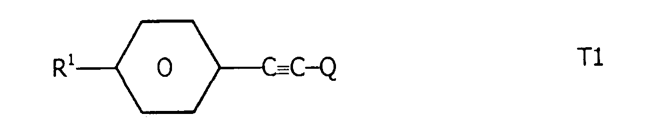 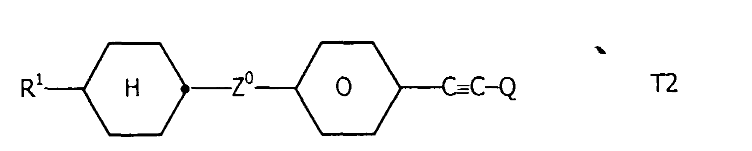 où
Q représente : 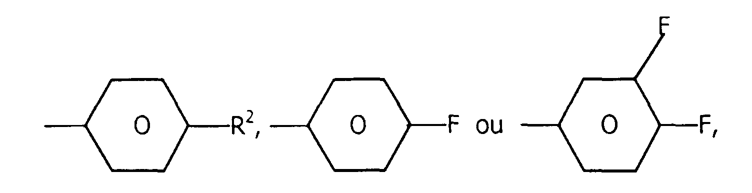 R¹ et R² représentent, indépendamment l'un de l'autre, R, R étant un alkyle comportant 1 à 12 atomes de C, où également un ou deux groupes CH₂ non adjacents peuvent être remplacés par -O-, -CH=CH-, -CO-, -O-CO- ou -CO-O- et Z° représente -CH₂CH₂- ou une liaison simple et les noyaux 1,4-phénylène peuvent être également substitués latéralement par le fluor,
b) 10 à 80 % en poids d'un composant C de type cristal liquide, constitué d'un ou plusieurs composés ayant une anisotropie diélectrique supérieure à +1,5, le composant C contenant au moins un composé choisi dans le groupe constitué des composés Ca à Cd : 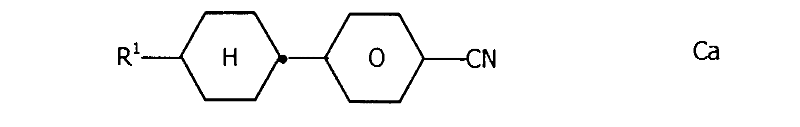 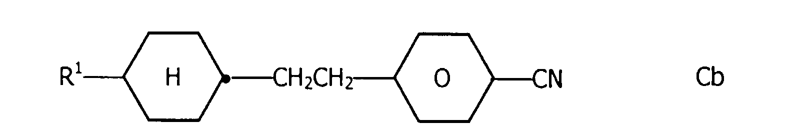 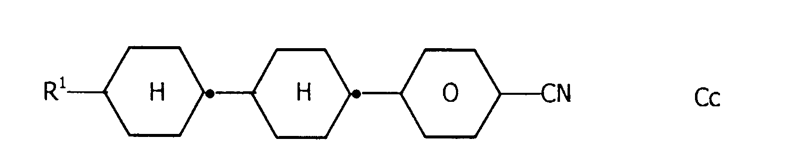 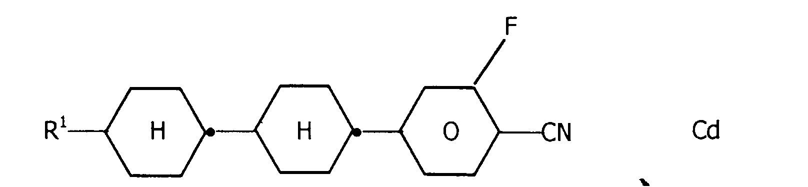
R¹ ayant la signification indiquée ci-dessus,
c) 0 à 20% en poids d'un composant D de type cristal liquide, constitué d'un ou plusieurs composés ayant une anisotropie diélectrique inférieure à -1,5 et
d) un composant E optiquement actif en une quantité telle que le rapport entre l'épaisseur de la couche (espacement des plaques de support à faces planes et parallèles) et le pas naturel de la composition de cristaux liquides nématiques chiraux soit compris entre environ 0,2 et environ 1,3,
complémentairement au moins un composant choisi dans le groupe A constitué des composés de formules AII et AIV à AVI : 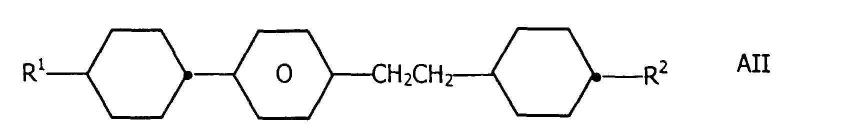 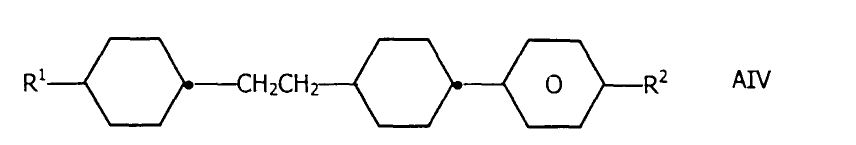 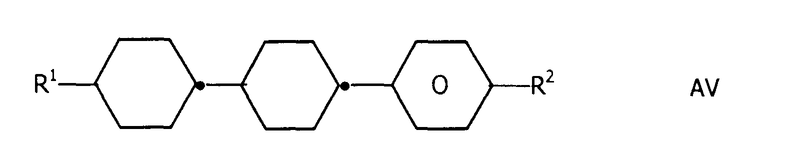 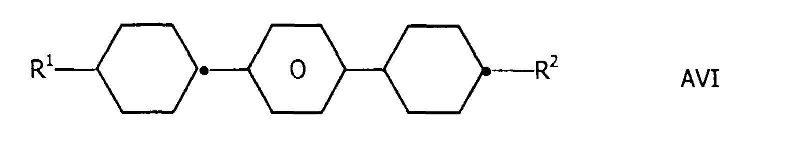 où R¹ et R² représentent, indépendamment l'un de l'autre, R et
R est un alkyle comportant 1 à 12 atomes de C, où également un ou deux groupes CH₂ non adjacents peuvent être remplacés par -O-, -CH=CH-,-CO-, -O-CO- ou -CO-O-,
et/ou choisi dans le groupe B1 constitué des composés de formules BI à BIV : 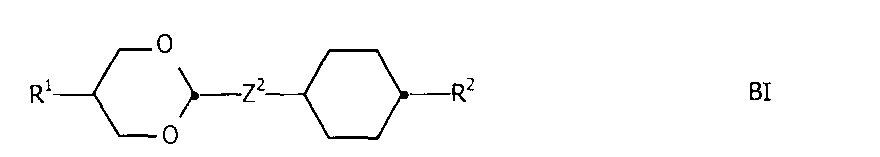 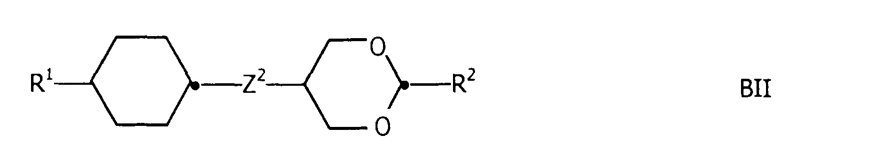 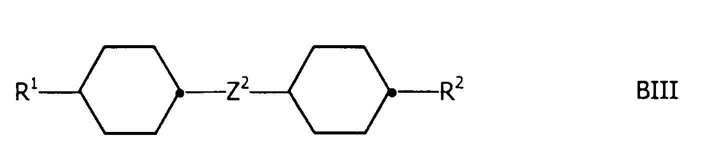 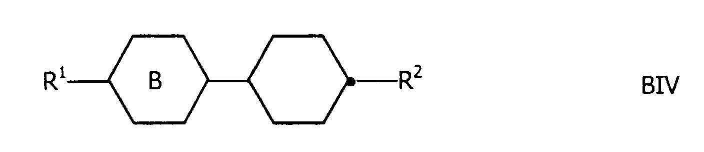 où R¹ et R² ont, indépendamment l'un de l'autre, la signification indiquée pour R et Z² représente -CH₂CH₂-, -CO-O-, -O-CO- ou une liaison simple et 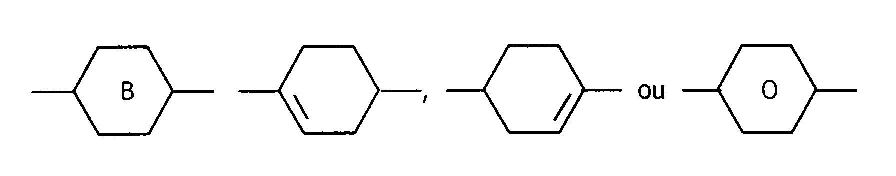 et/ou au moins un composant choisi dans le groupe B2 constitué des composés de formules BV à BVII : 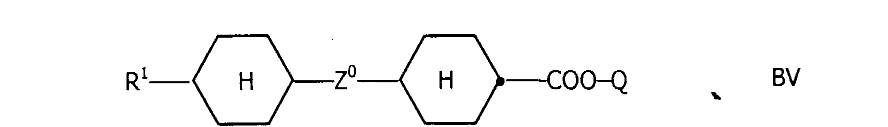 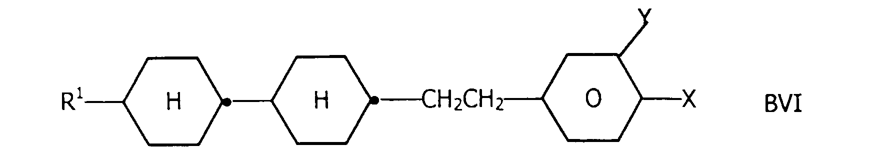 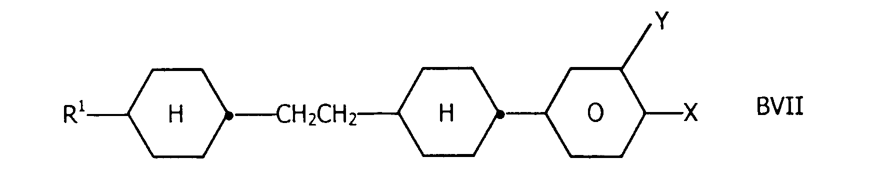 où
R¹ a la signification indiquée pour R,
Z^{o} est -CH₂CH₂- ou une liaison simple et
Q représente 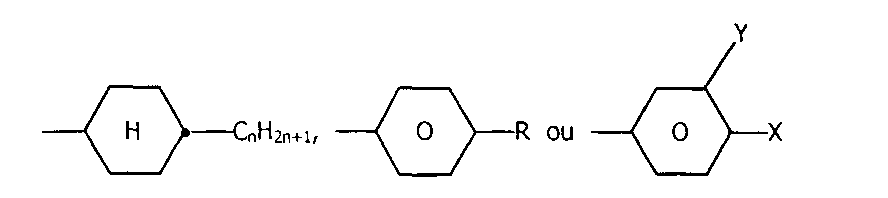
n étant compris entre 1 et 9, X représentant CN ou F et Y représentant H ou F,
et/ou au moins un composant choisi dans le groupe B3 constitué des composés de formules BVIII et BIX : 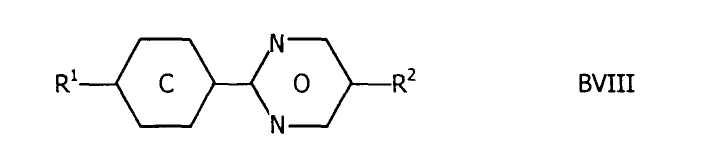 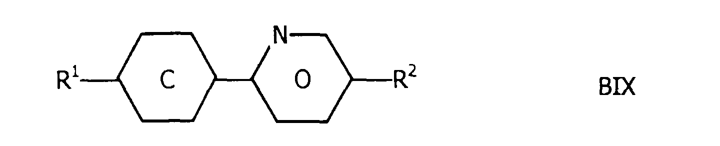 R¹ et R² ayant, indépendamment l'un de l'autre, la signification indiquée pour R et représentant : 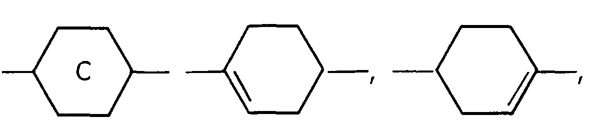 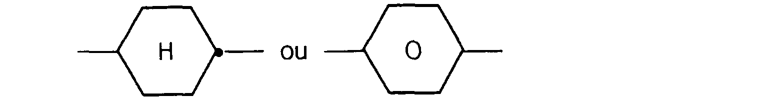 et/ou un ou plusieurs composés choisis dans le groupe suivant : 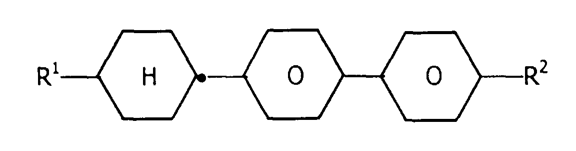 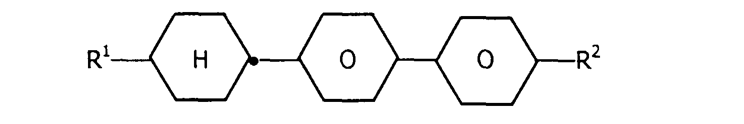 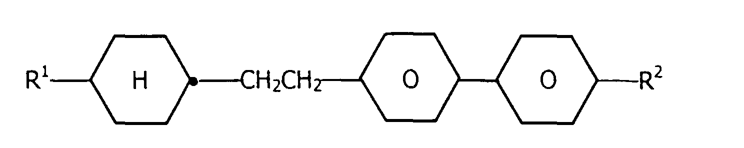 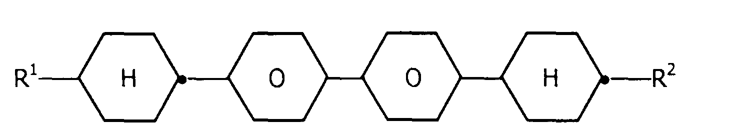 où R¹ et R² ont les significations préférées indiquées pour le composant A et où l'un des deux groupes 1,4-phénylène peut être également substitué par le fluor et présente une plage de phase nématique d'au moins 60°C, une viscosité ne dépassant pas 30 mPa.s et une anisotropie diélectrique d'au moins +5, les anisotropies diélectriques des composés et les paramètres rapportés au mélange de cristaux liquides nématiques étant rapportés à une température de 20°C,
sous réserve
(a) que soient exclues les compositions de cristaux liquides nématiques ayant un rapport diélectrique Δε/ε_{┴}< 2,0, Δε représentant l'anisotropie diélectrique et ε_{┴} la constante diélectrique en direction de l'axe court des molécules de cristaux liquides et
(b) que soient exclues les compositions de cristaux liquides nématiques contenant les composés de formules : 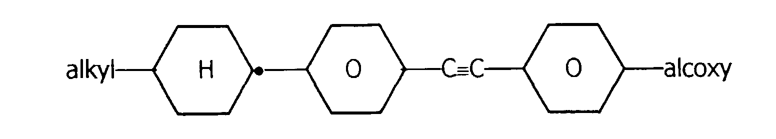 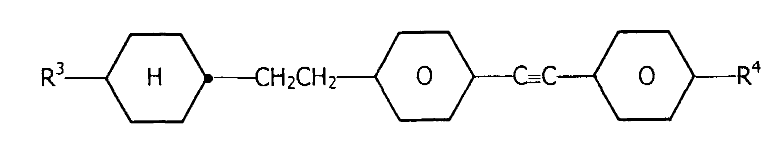 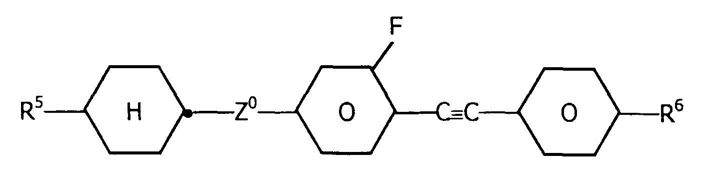 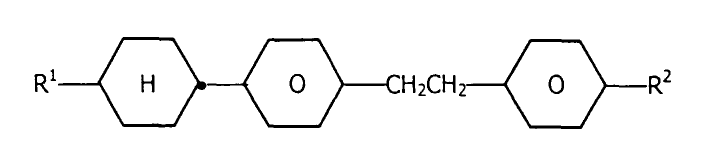 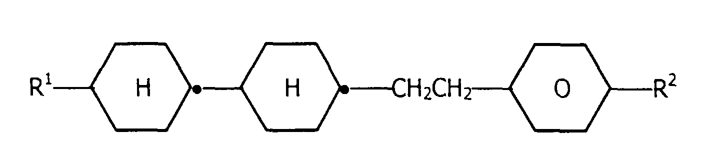 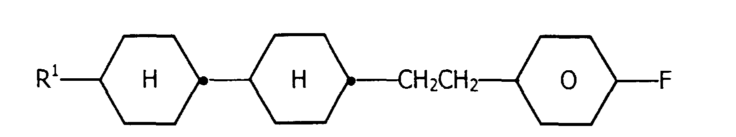 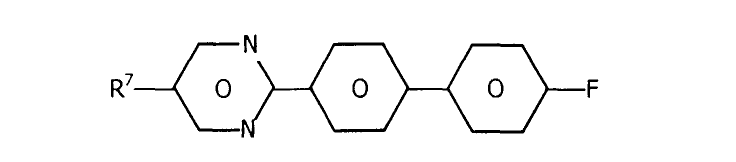
où
les groupes alkyles ou alcoxy sont linéaires et représentent jusqu'à 7 atomes de C,
R³ et R⁴ représentent un groupe alkyle comportant 1 à 8 atomes de C,
R⁵ et R⁶ représentent un groupe alkyle comportant 1 à 10 atomes de C,
Z⁰ représente -CH₂CH₂- ou une liaison simple,
R¹ et R² représentent, indépendamment l'un de l'autre, R et R est un alkyle comportant 1 à 12 atomes de C, où également un ou deux groupes CH₂ non adjacents peuvent être remplacés par -O-, -CH=CH-, -CO-, -O-CO- ou -CO-O- et
R⁷ représente un alkyle comportant 1 à 12 atomes de C.

2. Afficheur selon la revendication 1, caractérisé en ce que la composition de cristaux liquides contient 5 à 15 % de composés du groupe suivant : 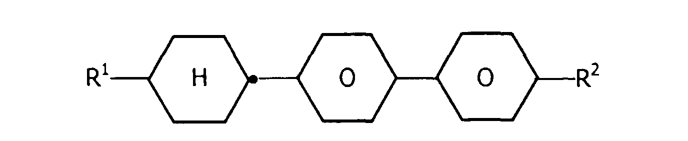 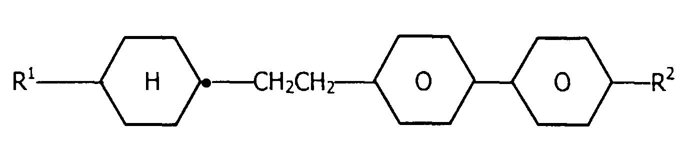 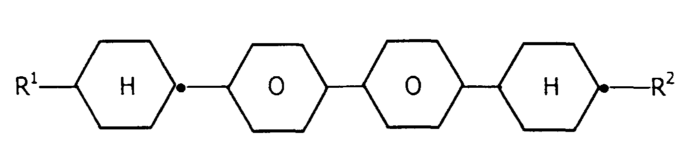 où R¹ et R² ont les significations préférées indiquées pour le composant A et où l'un des deux groupes 1,4-phénylène peut être également substitué par le fluor.

3. Afficheur selon la revendication 1 ou 2, caractérisé en ce que le composant C contient des composés choisis dans le groupe C constitué des composés de formules CI à CIII: 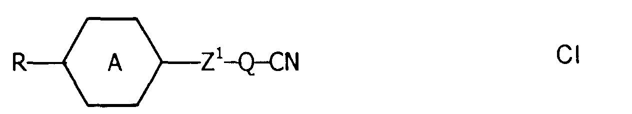 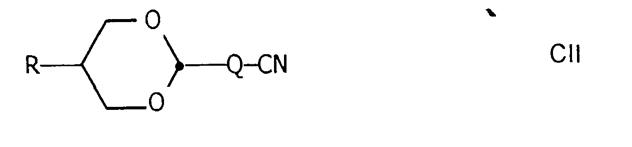 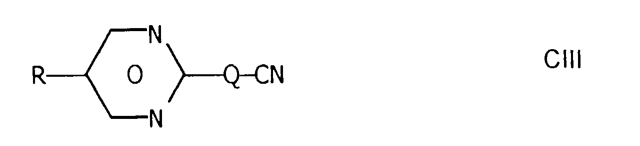 où
R a la signification indiquée dans la revendication 1,
Q représente 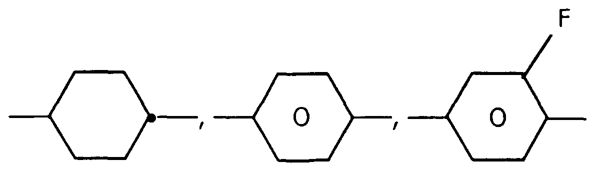 ou 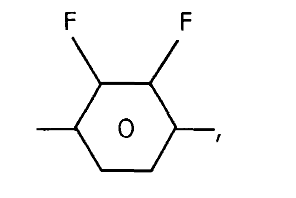
Z¹ 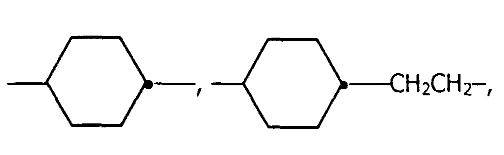 une liaison simple, -CH₂CH₂-, -CO-C- ou -O-CO- et

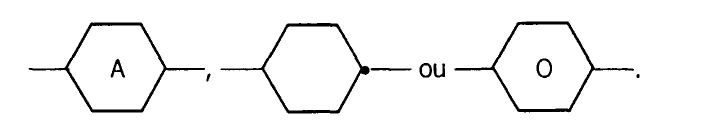

4. Afficheur selon au moins l'une des revendications 1 à 3, caractérisé en ce que la composition de cristaux liquides nématiques est composée de 30 à 60 % en poids du composant C, de 20 à 70 % en poids des composés des groupes A et B, de 0 à 10 % en poids du composant D et d'une quantité du composant E s'ajoutant pour obtenir 100 % en poids.

5. Afficheur selon au moins l'une des revendications 1 à 4, caractérisé en ce que le composant D contient un ou plusieurs composés comportant un groupe 1-cyano-trans-1,4-cyclohexylène ou un groupe 2,3-difluoro-1,4-phénylène.

6. Afficheur selon au moins l'une des revendications 1 à 5, caractérisé en ce que la composition de cristaux liquides nématiques contient au moins deux composés de formule AV.

7. Afficheur selon au moins l'une des revendications 1 à 6, caractérisé en ce que la composition de cristaux liquides nématiques contient des composés de formule BIII.

8. Afficheur selon la revendication 7, caractérisé en ce que la composition de cristaux liquides contient des composés de formule : 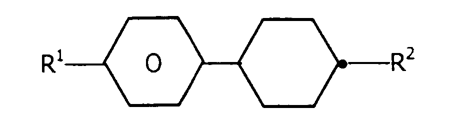 où
R¹ est CH₃-(CH₂)ₙ-O- ou trans-H-(CH₂)ᵣ-CH =CH-(CH₂CH₂)ₛ-CH₂-O- et
R² (CH₃-(CH₂)ₜ-,
n étant égal à 1, 2, 3 ou 4,
r à 0, 1, 2 ou 3,
s à 0 ou 1 et
t à 1, 2, 3 ou 4.

9. Afficheur selon la revendication 7 ou 8, caractérisé en ce que la composition de cristaux liquides contient des composés de formules : 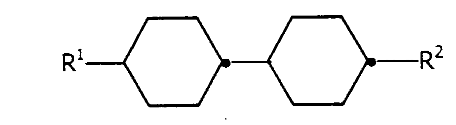 ou 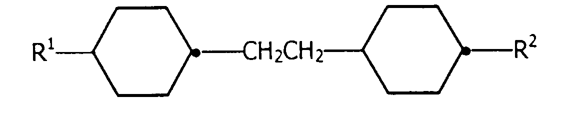 où
R¹ est CH₃-(CH₂)ₙ-O-,
CH₃-(CH₂)ₜ-,
trans-H-(CH₂)ᵣ-CH=CH-(CH₂CH₂)ₛ-CH₂-O- ou
trans-H-(CH₂)ᵣ-CH=CH-(CH₂CH₂)ₛ-, et
R² CH₃-(CH₂)ₜ-,
n, r, s et t ayant la signification indiquée dans la revendication 8.

10. Afficheur selon au moins l'une des revendications 1 à 9, caractérisé en ce que le composant C contient un ou plusieurs composés comportant un groupe 4-fluorophényle ou un groupe 3,4-difluorophényle.

11. Afficheur selon la revendication 10, caractérisé en ce que la composition de cristaux liquides contient au moins un composé du groupe suivant : 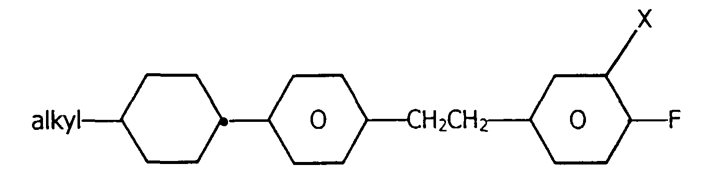 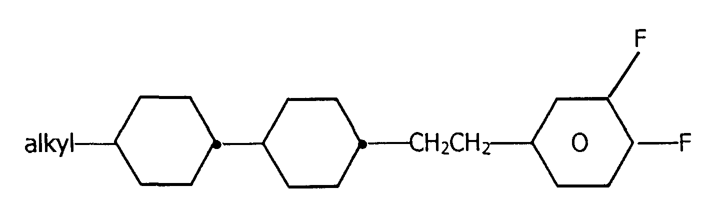 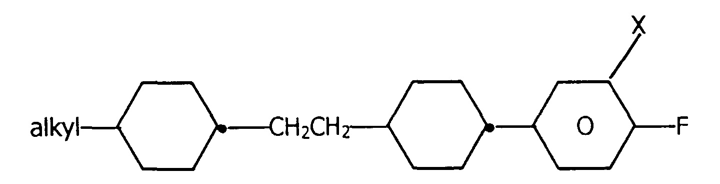 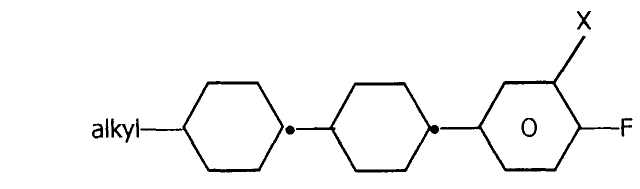 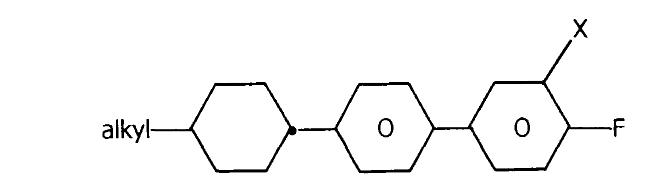 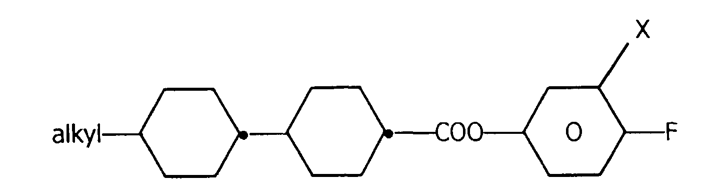 où le groupe alkyle est un groupe alkyle linéaire comportant 2 à 7 atomes de C et X est H ou F.

12. Afficheur selon au moins l'une des revendications 1 à 11, caractérisé en ce que la composition de cristaux liquides contient un ou plusieurs composés dans lesquels R est un groupe trans-alcényle ou un groupe trans-alcényloxy.

13. Composition de cristaux liquides nématiques ayant la composition définie dans au moins l'une des revendications 1 à 12.
